(19) Europäisches Patentamt
European Patent Office
Office européen des brevets

(11) **EP 3 645 869 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **17746541.6**

(22) Anmeldetag: **30.06.2017**

(51) Internationale Patentklassifikation (IPC):
**F03D 7/06** (2006.01)　　**F03D 3/06** (2006.01)

(52) Gemeinsame Patentklassifikation (CPC):
**F03D 3/068; F03D 7/06;** F05B 2250/311;
F05B 2260/79; Y02E 10/74

(86) Internationale Anmeldenummer:
**PCT/IB2017/053974**

(87) Internationale Veröffentlichungsnummer:
**WO 2019/002923 (03.01.2019 Gazette 2019/01)**

(54) **VERTIKALWINDKRAFTANLAGE MIT KOAXIALEM PITCHMOTOR SOWIE BAUSATZ FÜR SELBIGE UND VERFAHREN FÜR IHREN BETRIEB**

VERTICAL WIND TURBINE COMPRISING A COAXIAL PITCH MOTOR, KIT FOR SAME, AND METHOD FOR OPERATING SAME

ÉOLIENNE VERTICALE PRÉSENTANT UN MOTEUR À PAS COAXIAL AINSI QUE KIT DE MONTAGE POUR CELLE-CI ET PROCÉDÉ POUR SON FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.05.2020 Patentblatt 2020/19**

(73) Patentinhaber: **Agile Wind Power AG**
**8600 Dübendorf (CH)**

(72) Erfinder:
• **HUG, Thomas Hans**
**8484 Weisslingen (CH)**
• **ORAM, Christian**
**8415 Berg am Irchel (CH)**
• **WENGER, Johannes**
**8903 Birmensdorf (CH)**

(74) Vertreter: **IPrime Rentsch Kaelin AG**
**Hirschengraben 1**
**8001 Zürich (CH)**

(56) Entgegenhaltungen:
**WO-A1-2005/100785　　CN-A- 102 536 643**
**US-B1- 6 379 115**

**Beschreibung**

Die vorliegende Erfindung betrifft eine Vertikalwindkraftanlage sowie einen Bausatz für eine Vertikalwindkraftanlage und ein Verfahren zum Betrieb einer Vertikalwindkraftanlage gemäss den Oberbegriffen der Patentansprüche 1 bzw. 15.

**Technologischer Hintergrund**

Aus dem Stand der Technik sind Vertikalwindkraftanlagen mit aktiver Flügelsteuerung bekannt. So beschreibt die WO 2015/185299 A1 der Anmelderin eine vertikale Windkraftanlage mit vertikalen Flügeln, die jeweils von einem Servomotor über ein Getriebe angetrieben in eine vorbestimmte und jederzeit änderbare Drehstellung um ihre Drehachse gebracht werden können, wobei virtuelle Kurvenscheiben bereitgestellt werden, welche jeweils den Verlauf des Flügelwinkels über der Position des Flügels auf dem Umlaufkreis festlegen, und wobei die aktive Steuerung nach Massgabe der virtuellen Kurvenscheiben erfolgt.

Des Weiteren betrifft die Europäische Patentschrift EP 2 235 365 B1 der Anmelderin betrifft eine Windkraftanlage mit wenigstens einem um eine vertikale Achse drehbaren Rotor, welcher zwischen zwei horizontalen, in einem Abstand übereinanderliegenden Lagerebenen eine Mehrzahl von auf einem Umfangskreis gleichmässig verteilt angeordneten, jeweils um eine vertikale Schwenkachse schwenkbaren Rotorblättern umfasst, deren Schwenkbereich beidseitig durch einen Anschlag begrenzt ist.

Ferner offenbart die Druckschrift US 3,902,072 A einen Windkraftgenerator mit einer horizontalen rotierenden Plattform, auf der am Aussenumfang eine Vielzahl von vertikalen Flügeln angeordnet ist, die alle koaxial um eine zentrale Achse und jeweils um eine eigene Achse rotieren. Die Drehung der vertikalen Hügel richtet sich nach Änderungen in der Windrichtung und Windgeschwindigkeit und die Drehung jedes einzelnen Flügels ist so gesteuert, dass auf 3/4 des Umlaufsweges der Plattform aus dem Wind Leistung entnommen wird, während auf dem Rest des Weges die Flügel so gestellt sind, dass sie dem Wind minimalen Widerstand bieten. Die Steuerung der Flügel erfolgt über eine zentrale Getriebe-Mechanik mit einem gemeinsamen Servomotor.

Die Druckschrift US 4,410,806 A beschreibt eine Vertikalwindkraftanlage mit einer rotierenden Struktur, die eine Serie von drehbeweglichen vertikalen Flügeln umfasst, deren Stellungen so gesteuert werden, dass sich eine konstante Drehzahl der rotierenden Struktur ergibt, sofern eine ausreichende Windgeschwindigkeit vorliegt. Eine Mikroprozessor-Steuerung verarbeitet Informationen über Windgeschwindigkeit, Windrichtung und Drehzahl der rotierenden Struktur und erzeugt ein elektrisches Signal zum Einstellen der Flügelposition. Die Steuerung der Anlage umfasst elektrische Flügel-Aktuatoren, mit deren Hilfe die Flügel der rotierenden Struktur moduliert werden. Die Flügelmodulation steuert den Anstellwinkel, der seinerseits die Drehzahl des Rotors bestimmt. Ein Windgeschwindigkeitsmesser gibt Daten für Start und Stopp der Anlage aus, während ein Windrichtungsmesser eingesetzt wird, um das Umschlagen der Flügel bei 90° und 270° relativ zur Windrichtung zu halten. Die Steuerung ist so ausgelegt, dass bei Windgeschwindigkeiten zwischen 19 und 40 Meilen/h eine konstante Drehzahl aufrechterhalten wird.

Die Druckschrift US 4,494,007 A offenbart eine Vertikalwindkraftanlage, bei der die Orientierung der um eine gemeinsame zentrale Achse rotierenden Flügel von einer Windfahne über eine gemeinsame Mechanik während ihres Umlaufs um die zentrale Achse so gesteuert wird, dass, wenn sich die Windgeschwindigkeit ändert, die Drehstellung der Flügel verändert wird.

Die Druckschrift US 4,609,827 A beschreibt eine vertikale Windkraftanlage mit Rotorblättern, die ein Flügelprofil aufweisen. Ein positives und synchrones Flügel-Orientierungssystem wird durch einen ausserhalb des Rotors angeordneten Mechanismus gesteuert.

Schliesslich beschreiben Lixun Zhang, Yingbin Liang, Erxiao Li, Song Zhang und Jian Guo in «Vertical Axis Wind Turbine with Individual Active Blade Pitch Control»; College of Mechanical and Electrical Engineering; Harbin Engineering University; Harbin, China; 2012 IEEE, eine Vertikalwindkraftanlage mit individuell aktiver Flügel-Steuerung, wobei Servomotoren auf die Flügel haltende Arme montiert sind und jeweils über einen Riementrieb eine Pitchwinkelverstellung der Flügel in Abhängigkeit deren Azimut-Winkels bewirken sollen.

Paraschivoiu Ion, Trifu Octavian und Saeed F befassen sich in «H-Darrieus Wind Turbinewith Blade Pitch Control»; International Journal of Rotating Machinery, vol. 2009, mit einer Variation der Pitchwinkel der Flügel einer Vertikalwindkraftanlage in Abhängigkeit vom Azimut-Winkel zur Maximierung eines vom Rotor der Vertikalwindkraftanlage abgegebenen Drehmoments.

Y. Staelens, F. Saeed and I. Paraschivoiu, beschreiben in «A Straight-bladed Variablepitch VAWT Concept for Improved Power Generation»; ASME 2003, Wind Energy Symposium, vol. 2003, pp. 146-154; January 2003, Untersuchungen zur Leistungsverbesserung von Vertikalwindkraftanlagen mit Flügeln, deren Pitchwinkel variabel ist. An jedem Flügel soll die Tangentialkraft durch Variation des Pitchwinkels in der jeweiligen Drehstellung in Abhängigkeit vom Azimut-Winkel optimiert werden. Verschiedene Flügelprofile werden untersucht.

Ferner ist in US 6 379 115 B1 eine Windkraftanlage mit einer frei drehbaren Rotorwelle und mehreren Paaren von schwenkbaren Stützstangen beschrieben, die an der Rotorwelle vorgesehen sind, und mir Windaufnahmeblättern, die jeweils drehbar zwischen den Stützstangen mit Windaufnahmeblattwellen angeordnet sind. Die Windkraftanlage wird zum Antreiben einer Hebepumpe, eines Generators und dergleichen unter Verwendung einer Rotationsantriebskraft angewendet. Ein Anemometer/Anemoskop misst die Windgeschwindigkeit und -richtung. Ein Servomotor steuert die Richtung der Windaufnahmeblätter basierend auf der erfassten Geschwindigkeit und -richtung. Es werden auch verschiedene Verfahren zur Steuerung der Windkraftanlage bereitgestellt.

Bei aus dem Stand der Technik bekannten Vertikalwindkraftanlagen ist von Nachteil, dass Flügelsteuerung und -antrieb keine zufriedenstellende Energieausbeute bzw. einen angemessenen Wirkungsgrad ermöglichen. Zudem verbraucht der Flügelantrieb zuviel Energie und ist verschleissanfällig, was den Wirkungsgrad und Standzeiten der Anlagen auf unzufriedenstellende Art und Weise minimiert.

## Darstellung der Erfindung

Eine Aufgabe der Erfindung besteht darin, mindestens einige der Nachteile des Standes zu vermeiden. Insbesondere sollen Wirkungsgrad und Standzeiten von Vertikalwindkraftanlagen gegenüber dem Stand der Technik erhöht werden. Diese Aufgabe wird durch die Merkmale der unabhängigen Patentansprüche 1 und 15 gelöst.

Insbesondere werden die Nachteile aus dem Stand der Technik durch eine erfindungsgemässe Vertikalwindkraftanlage mit einer Vielzahl vertikaler Flügel, überwunden, die unabhängig voneinander jeweils an einer vertikalen Flügelachse befestigt um eine jeweilige Flügeldrehachse motorisch drehbar beweglich und auf einer gemeinsamen Kreisbahn um eine vertikale Rotordrehachse rotierbar gelagert sind, wobei die Flügelachsen jeweils mit wenigstens einem Pitchmotor zum motorischen Drehen der Flügel versehen sind, dessen Motorwelle konzentrisch zur jeweiligen Flügeldrehachse verläuft, wobei jeder Pitchmotor eine Verschalung mit einer Oberschale, einer Unterschale und einem nach aerodynamischen Aspekten ausgeformten Fortsatz aufweist, der sich an Oberschale und Unterschale anschließt und dessen Aussenkontur in einer Projektion entlang der Flügeldrehachse im Wesentlichen einem Flügelprofil der Flügel entspricht.

Bei einem erfindungsgemässen Verfahren werden die Nachteile aus dem Stand der Technik überwunden, indem Winkelpositionen um eine jeweilige vertikale Flügelachse angetriebener vertikaler Flügel der Vertikalwindkraftanlage vorgegeben werden, wobei die Winkelpositionen mittels eines direkten Antriebs der Flügel durch eine jeweils konzentrisch zur Flügelachse angeordnete Motorwelle eines Pitchmotors permanent geregelt werden.

Die erfindungsgemässe Lösung hat den Vorteil, dass sie einen sehr präzisen und energiesparenden Antrieb der Flügel gemäss Pitch-Kurvenscheiben ermöglicht. Die Winkelpositionen der Flügel können ohne Verzögerung und unter Einbezug der variierenden Anlageverhältnisse (Windgeschwindigkeit, Windrichtung, Rotordrehung, Leistungsabgabe, etc.) bei einer Leistungsaufnahme der Pitchmotoren von maximal unter 10 % bis vorzugsweise unterhalb 0.5 %, beispielsweise 0.3 %, einer Generatorleistung der Vertikalwindkraftanlage optimal eingestellt werden.

Durch die erfindungsgemässe Lösung kann ein für Vertikalwindkraftanlagen bestehendes Erfordernis erfüllt werden, die Schnelllaufzahl $\lambda$ so zu wählen, dass der Winkel zwischen dem Anströmvektor des Windes und der Rotorblattsehne (der sog. Anstellwinkel) einen Wert nicht überschreitet bei dem die Strömung vom Profil abreisst. Die Schnelllaufzahl $\lambda$ ist definiert durch das Verhältnis der Umdrehungsgeschwindigkeit des Rotors zur Windgeschwindigkeit. Erfindungsgemässe vertikale Windkraftanlagen weisen bis zu einer Nenndrehzahl eine Schnelllaufzahl $\lambda$ von 2 bis 2.5, vorzugsweise ca. 2.3 auf, die durch eine Umfangsgeschwindigkeit der Flügel von ca. 27.6 m/s bei einer Windgeschwindigkeit im Nennbetrieb von 12 m/s festgelegt ist ($\lambda$=27.6 / 12 = 2.3).

Je höher die Schnelllaufzahl, desto kleiner der Anstellwinkel zum Profil. In der Realität heisst das, dass vertikale Windenergieanlagen in der Regel mit Schnelllaufzahlen $\lambda$ von über 4 betrieben werden. Dies führt zwangsläufig zu hohen Drehzahlen oder aber zu grossen Rotorradien um die für die Schnelllaufzahl notwendige Umfangsgeschwindigkeit zu erreichen. Hohe Umfangsgeschwindigkeiten wiederum erhöhen parasitäre Verluste, die durch Luftwiderstände von beispielsweise Rotorarmen und Abspannungen verursacht werden. Derartige Verluste gehen mit der dritten Potenz der Umfangsgeschwindigkeit in den Energieertrag ein.

Eine erfindungsgemässe permanente Pitch-Steuerung der Flügel hilft, die Schnelllaufzahl optimaler Weise möglichst konstant zu halten und gleicht negative Auswirkungen stark und schnell ändernder Windverhältnisse aus. Dadurch wird eine optimale Energieausbeute im Teillastbetrieb erreicht. Somit erlauben erfindungsgemässe Vertikalwindkraftanlagen eine wirtschaftlich effiziente Nutzung der Windenergie auch an Standorten mit stark wechselnden Windverhältnissen.

Im Weiteren tragen hohe Umfangsgeschwindigkeiten zu einer hohen Geräuschentwicklung sowie zu hohen Zentrifugalbeschleunigungen bei. Durch eine kontinuierliche Steuerung der Rotorblätter, wie sie bei erfindungsgemässen Vertikalwindkraftanlagen realisiert ist, kann im Prinzip jede Schnelllaufzahl gefahren werden und dies bei optimalem Pitchwinkel. Das heisst, ein Strömungsabriss kann auch bei tiefen Schnelllaufzahlen vermieden werden. Dadurch kann der optimale Betriebsbereich unter Einbezug parasitärer Widerstände evaluiert werden.

Numerische Simulationen mit einem DMS Modell (*Double Multiple Streamtube*) ergeben für erfindungsgemässe vertikaler Windkraftanlagen gemäss einem Ausführungsbeispiel eine maximale Energieausbeute bei einer Schnelllaufzahl von beispielsweise λ=2.3. Unter Miteinbezug geometrischer Dimensionen erfindungsgemässer Vertikalwindkraftanlagen ergeben sich hiermit Umfangsgeschwindigkeiten von ca. 100 km/h, was zu deutlich geringeren Geräuschentwicklungen als bei herkömmlichen Horizontalwindkraftanlagen sowie aus dem Stand der Technik bekannten Vertikalwindkraftanlagen führt, weil die Umfangsgeschwindigkeit sich in der 6. Potenz auf die Schallleistung auswirkt.

Ferner können in Verbindung mit einem Windparkwirkungsgrad von Vertikalwindkraftanlagen, der bei ca. 20 % liegt und damit günstiger ausfällt als ein bei ca. 10% liegenden Windparkwirkungsgrad von Horizontalwindkraftanlagen, erfindungsgemäss ausgestaltet und betriebene Vertikalwindkraftanlagen insbesondere in Windparks effizienter und kostengünstiger als Horizontalwindkraftanlagen bzw. mit doppeltem Windparkwirkungsgrad betrieben werden. Zudem sind erfindungsgemässe Vertikalwindkraftanlagen in einem Leistungsbereich von beispielsweise 750 kW Generatorleistung anders als Horizontalwindkraftanlagen ideal für das stark wachsende Segment des "*Distributed Wind Markets*" geeignet, in welchem umwelt- und gesellschaftlich verträgliche Lösungen sehr relevant sind (besiedelte Gebiete, logistisch anspruchsvolle Windstandorte).

Darüber hinaus weisen erfindungsgemässe Vertikalwindkraftanlagen ein vorteilhaftes Nachlaufverhalten auf. Indem die Flügel mithilfe der Pitchmotoren in ihrer Winkelposition variabel gehalten werden, was Strömungsabrisse verhindern hilft, werden Turbulenzen im Nachlauf minimiert. Eine daraus resultierende geringe Tubulenzintensität im Nachlauf erlaubt kürzere Abstände zwischen erfindungsgemässen Vertikalwindkraftanlagen und verbessert somit deren Parkwirkungsgrad weiter.

Infolge relativ kleiner und/oder leichter Bauteile und Komponenten ist eine Aufstellung von Vertikalwindkraftanlagen im Gegensatz zu Horizontalwindkraftanlagen ohne Schwertransport auch bei unwegsamem Gelände möglich. In normalem Gelände können alle (auch schweren) Bauteile einer Vertikalwindkraftanlage mit Hilfe eines herkömmlichen LKWs ohne Sondertransport transportiert werden. Im gebirgigen Gelände können die Komponenten mit leichtem Hubschrauber und die wenigen schweren Bauteile mit einem geländegängigen Fahrzeug transportiert werden.

Erfindungsgemässe Vertikalwindkraftanlagen können durch ein Selbstaufbau-System ohne Verwendung von zusätzlichen Schwerlastkränen installiert werden. Das Selbstaufbau-System umfasst einen zentralen, mit einem Turm bzw. Turmsystem einer erfindungsgemässen Vertikalwindkraftanlage mitwachsenden Kran und Schwerlastaufzugsrollen, die im Turm angeordnet sind. Alle schweren Hauptkomponenten können mittels einer mobilen Seilwinde am Boden und Umlenkrollen im Turm auf ihre jeweilige Montagehöhe gehievt werden.

Für Reparaturdemontagen und Montagearbeiten an den Rotorblättern und Blattlagern wird temporär nur ein kleiner Kran mit Hilfe eines Hubschraubers zuoberst auf einem jeweiligen Rotorarm platziert. Bei einfachen Wartungs- und Reparaturarbeiten auf dem Rotor wird dieser formschlüssig arretiert. Im Falle von Rotorlager-, Generator- oder Getriebeschäden muss der Rotor zu deren Demontage nicht abgebaut werden. Er wird im Stillstand mit einer Hub-Vorrichtung auf dem Turm mechanisch fixiert und so ein den Rotor tragendes Drucklager von der Rotorlast befreit. Diese Fixierung ist sturmlastbeständig. Die allfällig zu reparierenden Komponenten können dann ohne Kran mittels Seilwinde und Umlenkrollen im Turm abgesenkt und unten direkt auf einen LKW aufgeladen werden.

Schliesslich ist bei erfindungsgemässen vertikalen Windkraftanlagen noch hinsichtlich ihrer Umweltverträglichkeit von Vorteil, dass die Silhouette des vertikal ausgerichteten Rotors für Vögel und Fledermäuse besser erkennbar ist als ein horizontal drehender Dreiblattrotor. Zudem sind die Rotorblattgeschwindigkeiten mit maximal 100 km/h deutlich geringer als bei Horizontalwindkraftanlagen, bei denen Blattspitzengeschwindigkeiten von 300 bis 400 km/h auftreten. Das relativ langsam drehende Rotorsystem erfindungsgemässen Vertikalwindkraftanlage weist im Gegensatz zu Horizontalwindkraftanlagen einen ruhigen Schattenwurf sowie eine geringe Eiswurfweite auf. Das Erscheinungsbild einer erfindungsgemässen Vertikalwindkraftanlage integriert sich mit seinen hauptsächlich vertikalen Linien gut in die umliegende Landschaft.

Die erfindungsgemässe Lösung kann durch die folgenden weiteren, jeweils für sich vorteilhaften Ausführungsformen beliebig ergänzt und weiter verbessert werden, wobei ein Fachmann ohne Weiteres klar und eindeutig erkennen wird, dass Vorrichtungsmerkmale einer erfindungsgemässen Vertikalwindkraftanlage entsprechende Schritte eines erfindungsgemässen Verfahrens begründen und umgekehrt.

Gemäss einer ersten weiteren Ausführungsform einer erfindungsgemässen Vertikalwindkraftanlage ist vorgesehen, dass der Pitchmotor als Torquemotor ausgestaltet ist, mit wenigstens einem Rotor, der mit der Flügelachse drehstarr verbunden ist. Beispielsweise kann der Torquemotor als permanenterregter bürstenloser Gleichstrommotor in Innenläufer-Bauform ausgeführt sein. Der somit entlang seines äusseren Umfangs von einem Stator des Pitchmotors umgebene Rotor kann mit Hilfe eines Spannsatzes zur Drehmomentübertragung einfach und effektiv mit einer Motorwelle des Pitchmotors drehstarr verbunden sein.

Gemäss einer weiteren Ausführungsform ist vorgesehen, dass die Flügelachsen an Motorlagern im Pitchmotor gelagert sind. Mit anderen Worten können die Flügel im Pitchmotor drehbeweglich gehalten sein. Beispielsweise kann die Lagerung durch Schrägrollen- bzw. Wälz- oder Kegelrollenlager realisiert werden, die zwischen Flügelachse und Motor einerseits sowie Stator andererseits axial vorgespannt angeordnet sind, um sowohl Axial- als auch Radialkräfte aufzunehmen. Dies ermöglicht eine präzise Lagerung der Flügelachsen bei hohen Standzeiten und einem hocheffizienten Antrieb der Flügelachsen durch den Pitchmotor bei geringen Reibungsverlusten.

Gemäss einer weiteren Ausführungsform ist vorgesehen, dass die Motorlager innerhalb eines mit Hilfe von Dichtelementen gegenüber einer Umgebung der Vertikalwindkraftanlage abgedichteten Lageraufnahmeraum angeordnet sind. Innerhalb des Lageraufnahmeraums kann sich Schmiermittel, beispielsweise ein Fett, zum Schmieren der Motorlager befinden. Vorzugsweise ist der Lageaufnahme mit dem Schmiermittel gefüllt, das je nach Anforderungen beispielsweise alle 5 Jahre ausgetauscht bzw. wieder aufgefüllt wird. Somit wird eine effektive Schmierung der Motorlager erzielt, was dabei hilft, Standzeiten einer erfindungsgemässen Vertikalwindkraftanlage weiter zu maximieren.

Der Lageraufnahmeraum kann gegenüber einem Motorinnenraum wiederum mit Hilfe weiterer Dichtelemente abgedichtet sein, sodass der Motorinnenraum im Wesentlichen hermetisch abgeschlossen vor schädlichen Umwelteinflüssen geschützt ist. Der Motorinnenraum kann zumindest abschnittsweise durch ein Motorgehäuse gebildet bzw. davon umschlossen sein.

Ein Expansions- bzw. Ausgleichsgefäss kann über wenigstens eine Fluidleitung mit dem hermetisch abgeschlossenen Motorinnenraum fluidleitend verbunden sein und ein veränderliches Expansions- bzw. Ausgleichsvolumen bereitstellen, um temperaturbedingte Volumenveränderungen von Fluiden, insbesondere Luft, die sich in Freiräumen innerhalb des Motorraums befinden, auszugleichen. Zur Verminderung von Freiräumen im Motorinnenraum können Raumfüllelemente im Motorraum angeordnet sein, die beispielsweise aus Schaumstoff geformt sein können. Expansionsgefäss und Raumfüllelemente helfen zum einen, Kondensation von Luftfeuchtigkeit im Motorinnenraum zu vermeiden. Zum anderen verhindern Expansionsgefäss und Raumfüllelemente, dass Lager- und/oder Motorschmiermittel, wie beispielsweise Fett, bei Druckschwankungen verdrängt werden bzw. auslaufen.

Gemäss einer weiteren Ausführungsform ist vorgesehen, dass die Flügel an wenigstens einem vom Pitchmotor beabstandet angeordneten zusätzlichen Lagerpunkt um ihre Flügeldrehachse drehbar gelagert sind. So kann der Pitchmotor beispielsweise zwischen zwei zusätzlichen Lagerpunkten angeordnet sein. Daraus ergeben sich pro Flügel jeweils zwei Flügelabschnitte, nämlich ein Flügelabschnitt zwischen oberem Lagerpunkt und Pitchmotor sowie ein Flügelabschnitt zwischen Pitchmotor und unterem Lagerpunkt.

Vorzugsweise befindet sich jeweils eine Lagereinheit an den äusseren vom Pitchmotor wegweisenden Enden des Flügels. Die Lagereinheit umfasst ein Gehäuse, zwei Wälzlager und eine Hohlwelle, welche Rotorblätter der Flügel miteinander verbindet. An den zusätzlichen Lagerpunkten können Pendelrollenlager verwendet sein, die hauptsächlich in den Flügelenden auftretende hohe Radialkräfte aufnehmen und das gesamte Rotorsystem versteifen helfen. Hingegen können die Motorlager, beispielsweise zwei axial vorgespannte Kegelrollenlager umfassen, die gesamte Gewichtskraft der Flügel aufnehmen.

Gemäss einer weiteren Ausführungsform ist vorgesehen, dass die Flügelachsen jeweils einen Flügelblattachsabschnitt im Bereich eines Flügelblatts des Flügels sowie einen zwischen Flügelblattachsabschnitt und Motorwelle angeordneten Übergangsabschnitt umfassen. Übergangsabschnitt und Motorwelle können beispielsweise einstückig aus Metall ausgeformt sein. Der Übergangsabschnitt erlaubt eine optimale Verbindung zwischen Motorwelle und Flügelblattachsabschnitt.

Gemäss einer weiteren Ausführungsform ist vorgesehen, dass der Übergangsabschnitt sich von der Motorwelle weg verlaufend verjüngt. Beispielsweise kann der Übergangsabschnitt zapfenartig ausgestaltet sein. Ein Aussendurchmesser der Motorwelle kann grösser als ein Innendurchmesser des Flügelblattachsabschnittes sein. Somit hilft der Übergangsabschnitt, Grössenunterschiede zwischen Motorwelle und Flügelblattachsabschnitt zu überwinden und diese passgenau miteinander zu verbinden.

Gemäss einer weiteren Ausführungsform ist vorgesehen, dass die Pitchmotoren jeweils über ein Motorgehäuse verfügen, an dem eine die Flügel mit einer Rotornabe der Vertikalwindkraftanlage verbindende Flügelaufhängung befestigt ist. Die Flügelaufhängung kann beispielsweise eine Vielzahl von Streben umfassen. Wenigstens eine dieser Streben kann zum Halten des jeweiligen Flügels direkt mit dem Pitchmotor verbunden sein.

Gemäss einer weiteren Ausführungsform ist vorgesehen, dass die Flügelaufhängung eine Vielzahl von Streben umfasst, wobei jeweils wenigstens eine Strebe an das Motorgehäuse angeflanscht ist. Vorteilhafterweise kann jeweils eine Strebe aussen am Motorgehäuse im Bereich eines Aussenumfanges des Stators an den Pitchmotor stirnseitig angeflanscht sein. Dies erlaubt eine gewichtssparende hochstabile Konstruktion des gesamten Rotors, da der Pitchmotor gleichzeitig als Antriebs-, Lager- und Verbindungspunkt zwischen Flügelaufhängung und Flügel dient.

Gemäss einer weiteren Ausführungsform ist vorgesehen, dass das Motorgehäuse Stützlamellen umfasst, die radial zur Motorwelle verlaufend einen Lagersitz des Pitchmotors aussenumfangsseitig mit einer in Achsrichtung weisenden Wandung des Pitchmotorgehäuses verbinden. Derartige Stützlamellen helfen, von der Motorwelle über die Lagerpunkte auf das Motorgehäuse einwirkenden Kräfte sicher auf einen Anbindungspunkt der Flügelaufhängung am Motorgehäuse, wie beispielsweise den oben genannten Motorflansch, zu übertragen. Die Steifigkeit des Motorgehäuses ist erhöht, während dessen Gewicht möglichst gering gehalten ist.

Gemäss einer weiteren Ausführungsform ist vorgesehen, dass der Pitchmotor mit einer nach aerodynamischen Aspekten ausgestalteten Verschalung verkleidet ist. Durch die Verschalung kann ein vom Pitchmotor verursachter Luftwiderstand minimiert werden, was dabei hilft, den Wirkungsgrad einer erfindungsgemässen Vertikalwindkraftanlage weiter zu erhöhen. Des Weiteren hilft die Verschalung, etwaige Zwischenräume zwischen Flügelabschnitten bzw. zwischen den Flügelabschnitten und dem Motor zu minimieren und folglich einen Druckausgleich an den Zwischenräumen zu verhindern. Auf ähnliche Art und Weise können im Bereich der zusätzlichen Lagerpunkte bzw. Lagereinheiten zwischen Flügelabschnitten ebenfalls Verschalungen oder Abdeckungen vorgesehen sein, um einem Druckausgleich und damit verbundenem Wirkungsgradverlust entgegenzuwirken.

Gemäss einer weiteren Ausführungsform weist die Vertikalwindkraftanlage eine Steuerungseinrichtung auf, die zur Steuerung der Pitchmotoren mit diesen und mit wenigstens einem Windgeschwindigkeitssensor und/oder wenigstens einem Windrichtungssensor signalübertragend verbunden ist. Die Steuerungseinrichtung berechnet beispielsweise zyklisch einen Soll-Winkel der Flügel für jeden Pitchmotor und übergibt diese über eine Kommunikationseinrichtung an einem Steuerteil eines Umrichtersystems, das neben dem Steuerteil noch einen Versorgungsteil für jeden Pitchmotor besitzt. Der Steuerteil bewirkt eine Lageregelung der Flügel zur Einstellung einer gewünschten Winkelposition gemäss Soll-Winkel. Dazu kann das Leistungsteil dauerhaft einen elektrischen Strom von beispielsweise 150 $A_{RSM}$ umrichten und kurzfristig einen Spitzenstrom von 210 $A_{RMS}$ ausgeben, um ein maximales Drehmoment der Pitchmotoren zu erreichen. Die Steuerungseinrichtung überwacht dabei eine Genauigkeit der Flügelverstellung und ein Zustand der Antriebsregelung und kann diese beeinflussen.

Gemäss einer weiteren Ausführungsform ist vorgesehen, dass der wenigstens eine Windgeschwindigkeitssensor und/oder der wenigstens eine Windrichtungssensor im Bereich wenigstens einem der Pitchmotoren angeordnet ist. Beispielsweise kann der wenigstens eine Windgeschwindigkeitssensor und/oder der wenigstens eine Windrichtungssensor an einem Stab angebracht sein, der am Pitchmotor oder im Bereich des Pitchmotors befestigt ist und über eine Aussenkante des Flügels hinaus ragt. Insbesondere kann der wenigstens eine Windgeschwindigkeitssensor und/oder der wenigstens eine Windrichtungssensor an einem distalen, vom Flügel weg weisenden Ende des Stabes angebracht sein. Somit ist der wenigstens eine Windgeschwindigkeitssensor und/oder der wenigstens eine Windrichtungssensor vorzugsweise ausserhalb eines Einflussbereiches des Flügels angeordnet, in dem vom Flügel verursachte Luftströmungsänderungen bzw. Turbulenzen auftreten könnten. Alternativ oder zusätzlich können Sensoren, wie Windgeschwindigkeitssensor und/oder Windrichtungssensor sowie weitere Signal- und Messmittel an einem zentral auf der Rotornabe angeordneten vorzugsweise in Höhenrichtung über ein oberes Ende der Flügel hinwegragenden Mast angeordnet sein.

Gemäss einer weiteren Ausführungsform ist vorgesehen, eine erfindungsgemässe Vertikalwindkraftanlage als Bausatz bereitzustellen. Wie schon oben erwähnt, ermöglicht ein derartiger Bausatz, der im Wesentlichen alle Komponenten und Bauteile der Vertikalwindkraftanlage sowie Hilfsmittel für deren Installation, wie beispielsweise Kräne, Winden und dergleichen, beinhalten kann, eine erfindungsgemässe Vertikalwindkraftanlage an Orten zu installieren, die für Horizontalwindkraftanlagen nicht oder nur kaum zugänglich sind. Eine Bereitstellung einer erfindungsgemässen Vertikalwindkraftanlage als Bausatz hilft zudem, sicherzustellen, dass sämtliche zur Installation, zum Betrieb und zur Wartung der Vertikalwindkraftanlage notwendigen Komponenten, Bauteile und Hilfsmittel aus kontrollierten Bezugsquellen stammen und gewünschten Sicherheit- sowie Qualitätsanforderungen genügen.

Ein erfindungsgemässes Verfahren zum Betrieb einer Vertikalwindkraftanlage kann gemäss einer weiteren Ausführungsform dadurch verbessert werden, dass die Winkelpositionen durch Pitch-Kurvenscheiben vorgegeben werden. Somit liegen im Wesentlichen für jeden Azimut-Winkel Sollwerte zur Einstellung der Winkelposition vor. Für verschiedene Windgeschwindigkeiten können verschiedene Pitch-Kurvenscheiben vorgesehen werden.

Gemäss einer weiteren Ausführungsform eines erfindungsgemässen Verfahrens wird beim permanenten Regeln eine Windgeschwindigkeit, Windrichtung und Rotordrehung eines die Flügel umfassenden Rotors der Vertikalwindkraftanlage mit einbezogen. Somit kann eine erfindungsgemässe Vertikalwindkraftanlage mit möglichst geringen Soll-Wert-Abweichungen der Winkelpositionen und daher höchst effizient betrieben werden.

Ferner werden die Nachteile aus dem Stand der Technik durch eine erfindungsgemässe Vertikalwindkraftanlage mit einer Vielzahl vertikaler Flügel überwunden, die unabhängig voneinander jeweils an einer vertikalen Flügelachse befestigt um eine jeweilige Flügeldrehachse drehbar und auf einer gemeinsamen Kreisbahn um eine vertikale Rotordrehachse rotierbar gelagert sind, wobei die Vertikalwindkraftanlage dazu ausgestaltet ist, einen Pitchwinkel der Flügel zumindest in einem Teillastmodus der Vertikalwindkraftanlage so zu regeln, dass die Flügel mit einer im Wesentlichen konstanten Schnelllaufzahl λ rotieren.

Bei einem erfindungsgemässen Verfahren werden die Nachteile aus dem Stand der Technik ferner überwunden, indem Pitchwinkel um eine jeweilige vertikale Flügelachse angetriebener vertikaler Flügel der Vertikalwindkraftanlage vorgegeben werden, wobei die Pitchwinkel zumindest in einem Teillastmodus der Vertikalwindkraftanlage so geregelt werden, dass die Flügel mit einer im Wesentlichen konstanten Schnelllaufzahl λ rotieren.

Gemäss einer weiteren Ausführungsform einer erfindungsgemässen Vertikalwindkraftanlage ist vorgesehen, dass die Vertikalwindkraftanlage zum Betrieb im Teillastmodus in einem Bereich von Windgeschwindigkeiten ausgelegt ist, der zumindest abschnittsweise zwischen 3 bis 12 m/s liegen. Ein derartiger Teillastbereich ist sowohl für Binnen- als auch Küstenstandorte geeignet und gewährleistet eine hohe Energieausbeute sowie relativ viele Volllaststunden pro Jahr. Des Weiteren gewährleistet der Teillastbereich mit einer geringen Anfangswindgeschwindigkeit von 3 m/s eine Stromversorgung durch eine erfindungsgemässe Vertikalwindkraftanlage auch schon bei Schwachwind.

Gemäss einer weiteren Ausführungsform ist vorgesehen, dass die konstante Schnelllaufzahl zwischen 2 und 2.6, vorzugsweise zwischen 2.2 und 2.4, höchst vorzugweise im Wesentlichen 2.3 beträgt. Ein derartiger Wertebereich für die konstante Schnelllaufzahl bewirkt relativ geringe Umdrehungszahlen des Rotors und daher relativ geringe Flügelgeschwindigkeiten. Somit kann eine erfindungsgemässe Vertikalwindkraftanlage wie schon oben genannt mit vorteilhaft geringen Umwelteinflüssen betrieben werden.

Gemäss einer weiteren Ausführungsform ist vorgesehen, dass die Vertikalwindkraftanlage dazu ausgestaltet ist, den Pitchwinkel so zu regeln, dass die Flügel in einem Nennbetriebsmodus der Vertikalwindkraftanlage mit einer variablen Schnelllaufzahl rotieren. Somit kann eine erfindungsgemässe Pitchregelung zu Leistungsbegrenzung einer erfindungsgemässen Vertikalwindkraftanlage beitragen. Dies schont das Material einer erfindungsgemässen Vertikalwindkraftanlage und verringert somit ihren Verschleiss bzw. verlängert ihre Lebensdauer.

Gemäss einer weiteren Ausführungsform ist vorgesehen, dass die Vertikalwindkraftanlage dazu ausgestaltet ist, den Pitchwinkel so zu regeln, dass die Flügel im Nennbetriebsmodus mit einer im Wesentlichen konstanten Nenndrehzahl rotieren. Somit dreht der Rotor in einem Nenndrehzahlbereich. Dies hilft, Belastungsspitzen der Komponenten der Vertikalwindkraftanlage zu vermeiden und hilft daher weiter, das Material einer abschlussgemäss Vertikalwindkraftanlage zu schonen, Verschleiss zu verringern und Standzeiten zu erhöhen.

Gemäss einer weiteren Ausführungsform ist vorgesehen, dass bei einer ersten Abschaltwindgeschwindigkeit $v_3$ der Vertikalwindkraftanlage die variable Schnelllaufzahl $\lambda$ zwischen 1 und 1.8, vorzugsweise zwischen 1.3 und 1.5, höchst vorzugweise im Wesentlichen 1.38 beträgt. Die Abschaltwindgeschwindigkeit $v_3$ kann beispielsweise in einem Bereich von 20 m/s liegen. Insbesondere bei einer solchen relativ hohen Windgeschwindigkeit hilft der relativ niedrige Wertebereich der variablen Schnelllaufzahl, die Umfangsgeschwindigkeit der Flügel möglichst gering zu halten und damit eine sehr gute Umweltverträglichkeit einer erfindungsgemässen Vertikalwindkraftanlage zu gewährleisten.

Gemäss einer weiteren Ausführungsform ist vorgesehen, dass die Vertikalwindkraftanlage dazu ausgestaltet ist, den Pitchwinkel in einem Anlaufmodus so zu regeln, dass die Flügel von einem Widerstandslauf mit Schnelllaufzahlen $\lambda \leq 1$ ausgehend in einen Schnelllauf mit Schnelllaufzahlen $\lambda > 1$ übergehen. Somit kann insbesondere beim Anlaufen der Vertikalwindkraftanlage aus einem Rotorstillstand heraus die von den Flügeln auf Basis Ihres Windwiderstandes aufgenommene Energie optimal genutzt und ein am Rotor anliegendes Anlaufdrehmoment maximiert werden. Sobald der Rotor eine gewisse Umdrehungsgeschwindigkeit erreicht hat kann ein fliessender Übergang zum Schnelllauf der Flügel bereitgestellt werden. Dies hilft, die Anlaufzeiten einer erfindungsgemässen Vertikalwindkraftanlage insgesamt zu verkürzen und daher die Energieausbeute zu erhöhen.

Gemäss einer weiteren Ausführungsform ist vorgesehen, dass die Regelung des Pitchwinkels auf wenigstens einer Kurvenscheibe basiert, die für eine gesamte Rotation des Rotors den Pitchwinkel im Wesentlichen kontinuierlich festlegt. Eine kontinuierliche Festlegung des Pitchwinkels ermöglicht eine möglichst sanfte, sprungfreie Steuerung und Regelung einer erfindungsgemässen Vertikalwindkraftanlage mit möglichst wenig Parametersprüngen, wie sie bei in groben diskreten Schritten vorgegebenen Pitchwinkeln auftreten können. Für verschiedene Windgeschwindigkeiten können verschiedene Kurvenscheiben vorgegeben werden. Jede der Kurvenscheiben kann bezüglich der jeweiligen Windgeschwindigkeit und den sich daraus an den Flügeln ergebenden Strömungsverhältnissen optimiert werden.

Gemäss einer weiteren Ausführungsform ist vorgesehen, dass ein maximaler Betrag des Pitchwinkels für luvseitige Positionen des Flügels im Allgemeinen grösser ist als für leeseitige Positionen des Flügels jeweils unter Bezug zur Rotordrehachse. Mit anderen Worten kann für Azimut-Winkel kleiner 180° der Pitchwinkel im allgemeinen kleiner sein als für Azimut-Winkel zwischen 180 und 360°. Somit trägt die Pitchregelung den jeweiligen Strömungsverhältnissen an den Flügeln in Abhängigkeit von Azimut-Winkel Rechnung. Insbesondere werden somit leeseitig von Rotor und Flügeln selber verursachte Strömungseffekte, wie Turbulenzen und Wirbelschleppen, berücksichtigt, wodurch sich die Energieausbeute einer erfindungsgemässen Vertikalwindkraftanlage weiter verbessern lässt.

Gemäss einer weiteren Ausführungsform ist vorgesehen, dass für Windgeschwindigkeiten im Bereich einer Nennwindgeschwindigkeit bei einem von einer senkrecht zur Windrichtung stehenden Nulllinie aus gemessenen Azimut-Winkel von 0° der Pitchwinkel kleiner als null ist. Somit wird der Flügel also mit einem Pitchwinkel kleiner als 0° in den Wind gedreht bzw. bewegt sich von Lee nach Luv. Dies trägt zu einer verbesserten Dynamik einer erfindungsgemässen Vertikalwindkraftanlage und somit erhöhten Energieausbeute bei.

Gemäss einer weiteren Ausführungsform ist vorgesehen, dass zumindest für Windgeschwindigkeiten im Bereich der Nennwindgeschwindigkeit bei von einer senkrecht zur Windrichtung stehenden Nulllinie aus gemessenen Azimut-Winkel von 0° bis 90° ein lokales Maximum des Pitchwinkels vorliegt. Dies hilft, die am jeweiligen Flügel wirkenden Auftriebskräfte zu optimieren. Somit ist die Dynamik und die Energieausbeute einer erfindungsgemässen Windkraftanlage weiter verbessert.

Gemäss einer weiteren Ausführungsform weist die Vertikalwindkraftanlage wenigstens einen Windgeschwindigkeitssensor und/oder wenigstens einen Windrichtungssensor auf, der an wenigstens einem der Flügel angeordnet und signalübertragend mit einer Steuerreinrichtung zur Bestimmung eines Soll-Wertes des Pitchwinkels verbunden ist. Somit können Windgeschwindigkeit und/oder Windrichtung vorteilhafterweise am Flügel und als relevante Messgrössen somit möglichst nah an einer Regelstrecke zur Einstellung des Pitchwinkels ermittelt werden, die den Flügel und beispielsweise ein daran angebrachten bzw. in dessen Nähe angeordneten Pitchantrieb umfasst. Dies begünstigt eine möglichst präzise, fehlerfreie Pitchregelung.

Gemäss einer weiteren Ausführungsform ist vorgesehen, dass bei Windgeschwindigkeiten von Windstille bis zu einer weiteren Abschaltgeschwindigkeit der Vertikalwindkraftanlage ein Betrag eines Positionierungsfehlers bei der Regelung des Pitchwinkels im Wesentlichen stets kleiner als 5°, vorzugsweise kleiner als 3°, höchst vorzugsweise kleiner als 1.5° ist. Durch derart geringe Positionierungsfehler kann zum einen die Energieausbeute einer erfindungsgemässen Vertikalwindkraftanlage erhöht werden. Zum anderen lassen sich dadurch unerwünschte Fehlbelastungen sowie Vibrationen der Vertikalwindkraftanlage und Ähnliches minimieren, weil die Drehung der Flügel weitestgehend abweichungsfrei einem vorgegebenen Sollwert bzw. Soll-Pitchwinkel entspricht.

## Figurenbeschrieb

Anhand der nachfolgenden Figuren werden Ausführungsbeispiele der Erfindung beschrieben. Es zeigen:

Fig. 1        eine schematische Perspektivansicht einer erfindungsgemässen Vertikalwindkraftanlage;

Fig. 2        eine schematische Seitenansicht einer erfindungsgemässen Vertikalwindkraftanlage;

Fig. 3        eine schematische Draufsicht einer erfindungsgemässen Vertikalwindkraftanlage;

Fig. 4        ein in Fig. 2 markiertes Detail IV eines Flügels einer erfindungsgemässen Vertikalwindkraftanlage;

Fig. 5        ein in Fig. 4 markiertes Detail V eines Flügels einer erfindungsgemässen Vertikalwindkraftanlage mit einem erfindungsgemässen Pitchmotor in einer schematischen Querschnittsansicht entlang einer Drehachse des Flügels;

Fig. 6        eine schematische Perspektivansicht eines aerodynamisch verkleideten Pitchmotors einer erfindungsgemässen Vertikalwindkraftanlage;

Fig. 7        eine schematische Querschnittsansicht eines Antriebsstranges einer erfindungsgemässen Vertikalwindkraftanlage entlang einer Antriebswelle des Antriebsstranges;

Fig. 8        eine schematische Perspektivansicht einer ersten erfindungsgemässen Ausführungsform einer Nabenanbindung einer erfindungsgemässen Vertikalwindkraftanlage;

Fig. 9        eine schematische Perspektivansicht einer weiteren Erfindung gemessen Ausführungsform einer Nabenanbindung einer ordnungsgemässe Vertikalwindkraftanlage;

Fig. 10      eine schematische Draufsicht einer erfindungsgemässen Vertikalwindkraftanlage im Betrieb zur Illustration von Winkelpositionen und Kräfteverhältnissen an Flügeln der Vertikalwindkraftanlage;

Fig. 11      ein schematisches Diagramm zur Darstellung der Funktionsweise einer erfindungsgemässen Steuereinrichtung einer erfindungsgemässen Vertikalwindkraftanlage;

Fig. 12      ein schematisches Diagramm mit einer beispielhaften Drehmoment-Kennlinie eines erfindungsgemässen Pitchmotors für eine erfindungsgemässe Vertikalwindkraftanlage;

Fig. 13      ein schematisches Diagramm mit beispielhaften Kurvenscheiben zur Steuerung eines Pitchmotors für eine erfindungsgemässe Vertikalwindkraftanlage;

Fig. 14      eine schematische Perspektivansicht eines Prüfstandes zur Ermittlung eines Positionierungsfehlers eines Pitchmotors einer erfindungsgemässen Vertikalwindkraftanlage;

Fig. 15      ein schematisches Diagramm eines mittels des in Fig. 14 gezeigten Prüfstandes ermittelten Positionierungsfehlers eines erfindungsgemässen Pitchmotors über eine Vielzahl von Regelungszyklen;

Fig. 16      ein schematisches Diagramm eines Positionierungsfehlers eines erfindungsgemässen Pitchmotors über einen Regelungszyklus bei einer; und

Fig. 17    ein schematisches Diagramm eines Positionierungsfehlers eines erfindungsgemässen Pitchmotors über einen Regelungszyklus bei einer Abschaltwindgeschwindigkeit.

**Ausführung der Erfindung**

Zum besseren Verständnis der vorliegenden Erfindung wird nachfolgend auf die Zeichnungen Bezug genommen. Diese zeigen lediglich Ausführungsbeispiele des Erfindungsgegenstandes, wobei Merkmale, wie oben beschrieben, entsprechend jeweiliger Anforderungen beliebig miteinander kombiniert oder auch weggelassen werden können.

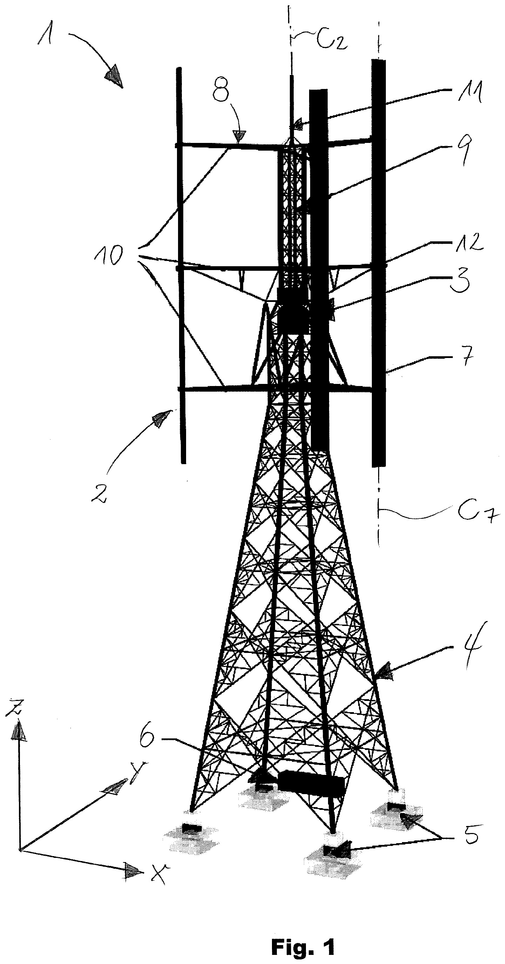

Figur 1 zeigt eine schematische Perspektivansicht einer erfindungsgemässen Vertikalwindkraftanlage 1. Die Vertikalwindkraftanlage 1 erstreckt sich entlang einer Längsrichtung X, einer Querrichtung Y und einer Höhenrichtung Z, die gemeinsam ein kartesisches Koordinatensystem aufspannen. Die Vertikalwindkraftanlage 1 umfasst einen Rotor 2, ein Maschinenhaus 3, ein Turmsystem 4, Fundamente 5 und einen containerartigen Schaltschrank 6.

Der Rotor 2 umfasst eine Vielzahl vertikaler Flügel 7, die über eine Flügelaufhängung 8 an einer Rotornabe 9 befestigt sind, die um eine vertikal ausgerichtete, also parallel zur Höhenrichtung Z verlaufende Rotordrehachse $C_2$ drehbar im Maschinenhaus 3 gelagert ist. Die Flügelaufhängung 8 umfasst Rotorarme 10, welche sich zwischen den Flügeln 7 und der Rotornabe 9 erstrecken. Ein Signal-und/oder Messmast 11 ist auf der Rotornabe 9 konzentrisch zur Rotordrehachse $C_2$ angeordnet.

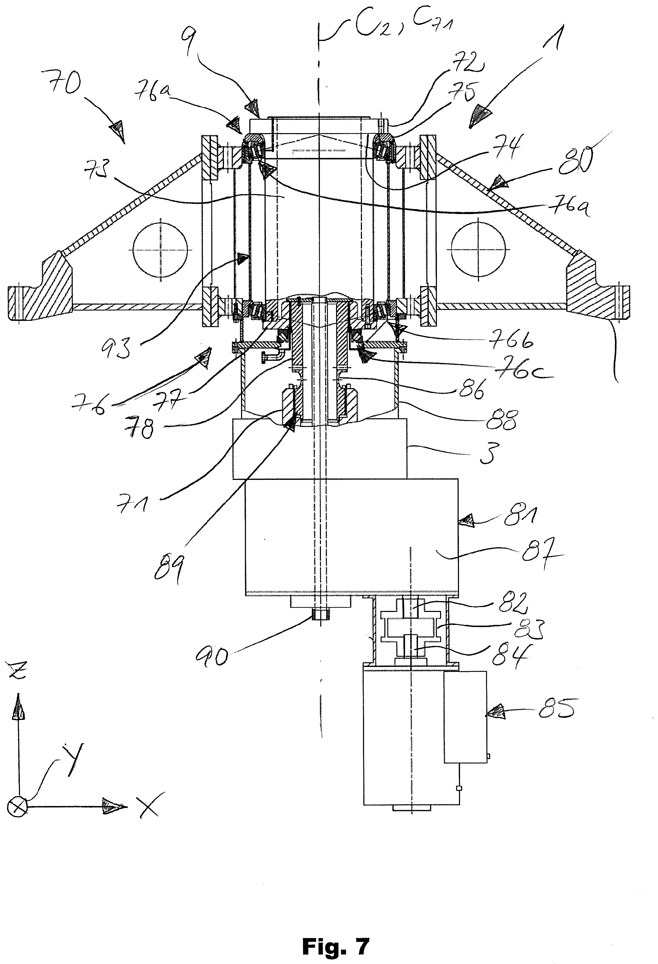

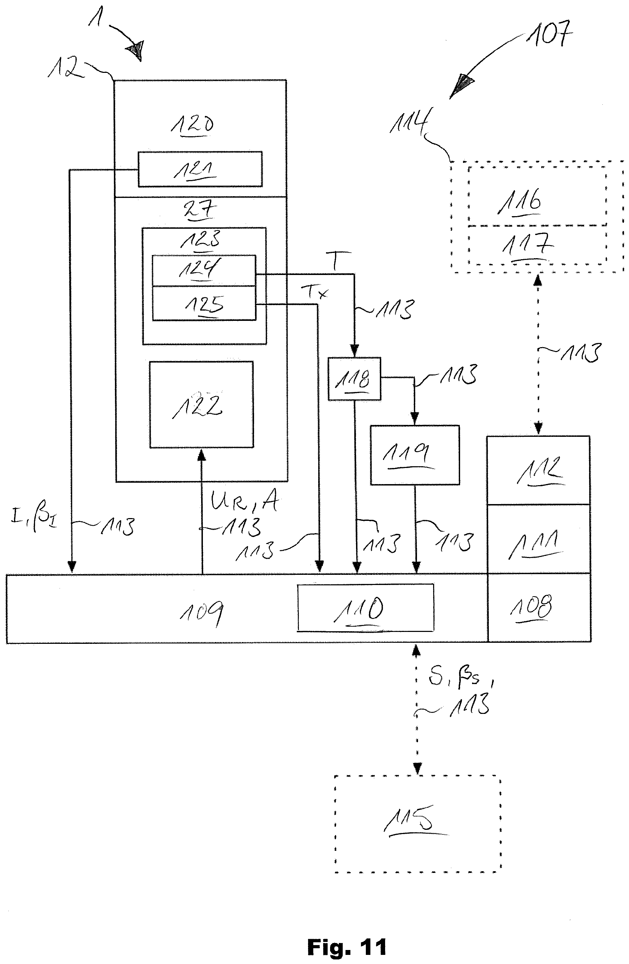

Das Maschinenhaus 3 ist in der Regel zuoberst auf dem Turmsystem 4 angeordnet, schalldämmend verkleidet und beinhaltet einen Antriebsstrang (Generator, Rotorlagerung, Getriebe, mechanische Bremse sowie Kühl-und Schmiersystem, siehe Fig.7) der Vertikalwindkraftanlage 1. Das Turmsystem 4 ist vorzugsweise als Gittermastturm ausgestaltet. Bei den Fundamenten 5 handelt es sich vorzugsweise um Betonfundamente, welche die Last des Turmsystems 4 samt Maschinenhaus 3 und Rotor 2 aufnehmen. Weitere Komponenten, wie beispielsweise elektrische Umformer, Schaltkomponenten und eine Steuerungseinrichtung (siehe Fig. 11) der Vertikalwindkraftanlage 1 sind vorzugsweise im Schaltschrank 6 untergebracht.

Die Flügel 7 sind um eine Flügeldrehachse $C_7$ drehbar gelagert, die ebenfalls im Wesentlichen parallel zur Höhenrichtung Z verläuft. Zum Drehen der Flügel 7 um ihre jeweilige Flügeldrehachse $C_7$ sind sie jeweils mit mindestens einem Pitchantrieb 12 versehen. Wenigstens einer der Rotorarme 10 ist mit dem Pitchantrieb 12 verbunden, der somit eine Last des Flügels 7 aufnehmen helfen kann.

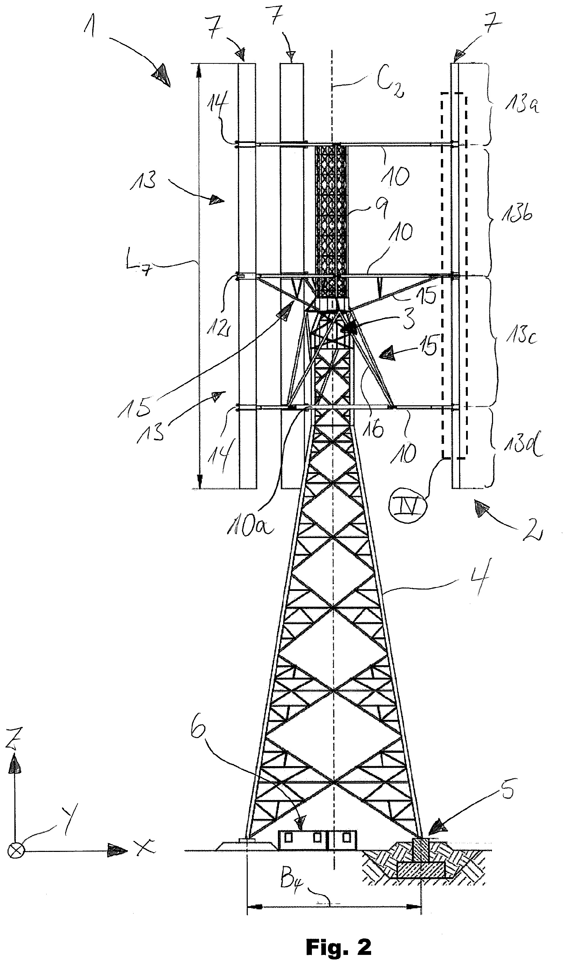

Fig. 2 zeigt die Vertikalwindkraftanlage 1 in einer schematischen Vorderansicht. Hier wird deutlich, dass die Flügel 7 mehrere Flügelabschnitte 13 umfassen, nämlich einen oberen Endabschnitt 13a einen oberen Mittelabschnitt 13b einen unteren Mittelabschnitt 13c und einen unteren Endabschnitt 13d. Der Pitchantrieb 12 ist zwischen dem oberen Mittelabschnitt 13b und dem unteren Mittelabschnitt 13c angeordnet. Zwischen dem oberen Endabschnitt 13a und dem mittleren Endabschnitt 13b sowie zwischen dem unteren Mittelabschnitt 13c und dem unteren Endabschnitt 13d ist jeweils ein zusätzlicher Lagerpunkt 14 vorgesehen.

An den Lagerpunkten 14 zwischen dem oberen Endabschnitt 13a und dem oberen Mittelabschnitt 13b sowie zwischen dem unteren Mittelabschnitt 13c und dem unteren Endabschnitt 13d sind die Flügel 7 jeweils durch einen der Arme 10 mit der Rotornabe 9 verbunden, der lediglich zur Übertragung radial zur Rotordrehachse $C_2$ wirkender Kräfte ausgestaltet ist, die folglich im Wesentlichen in einer horizontalen, parallel zur Längsrichtung X und Querrichtung Y aufgespannten Ebene wirken. Da die unteren der Arme 10 sich im Bereich des unteren Mittelabschnitts 13c und des unteren Endabschnitts 13d in Höhenrichtung Z unterhalb des Maschinenhauses 3 auf Höhe des Turmsystems 4 befinden, sind die Arme 10 dort über eine Queraufhängung 15 mit der Rotornabe 9 verbunden. Die Queraufhängung 15 umfasst eine Vielzahl von Querstreben 16, die zwischen den Armen 10 und einem Querverbindungselement 10a mit den Armen 10 und dem Querverbindungselement 10a verbunden sind und diese halten.

Am Pitchantrieb 12 werden zwischen dem oberen Mittelabschnitt 13b und dem unteren Mittelabschnitt 13c der Flügel 7 sowohl radial als auch parallel zur Rotordrehachse $C_2$ wirkende Kräfte aufgenommen. Folglich ist die gesamte Gewichtslast des Rotors 2 am Pitchantrieb 12 aufgenommen. Neben den die Pitchantrieb 12 horizontal mit der Rotornabe 9 verbindenden Arme 10 ist eine Stützstruktur 17 zur Aufnahme der Gewichtslast des Rotors 2 ausgestaltet. Die Stützstruktur 17 umfasst Querstreben 15, welche die am Pitchantrieb 12 angebrachten Arme 10 abstützen, indem sie Lasten unterhalb der Arme 10 an einem unteren Endabschnitt der Rotornabe 9 auf diese abtragen.

Ferner ist in Fig. 2 verdeutlicht, dass die Rotornabe 9 und das Turmsystem 4 jeweils als Gitterrohrstruktur ausgeführt sind. Am Kopf des als Gittermastturm ausgestalteten Turmsystems 4 verjüngt sich dieses in Richtung zum Maschinenhaus 3 hin und nimmt dort die gesamten vom Rotor 2 hervorgerufenen statischen und dynamischen Lasten auf. Am Fuss des Turmsystems 4 werden die Lasten über die Fundamente 5 in den Boden eingeführt. Das Maschinenhaus 3 ist über einen nicht dargestellten Leiteraufstieg zugänglich, auf den nicht weiter eingegangen wird.

Eine parallel zur Längsrichtung X gemessene maximale Breite $b_4$ des Turmsystems 4 an den Fundamenten 5 beträgt beispielsweise 22 m. Eine parallel zur Höhenrichtung Z gemessene Länge $L_7$ der Flügel 7 beträgt beispielsweise 54 m. Eine inklusive einer über den Boden hinaus ragenden Höhe der Fundamente gemessene Gesamthöhe der Vertikalwindkraftanlage 1 beträgt ohne Signal- und/oder Messmast 11 beispielsweise 105 m, mit Signal- und/oder Messmast 11 beispielsweise 110m.

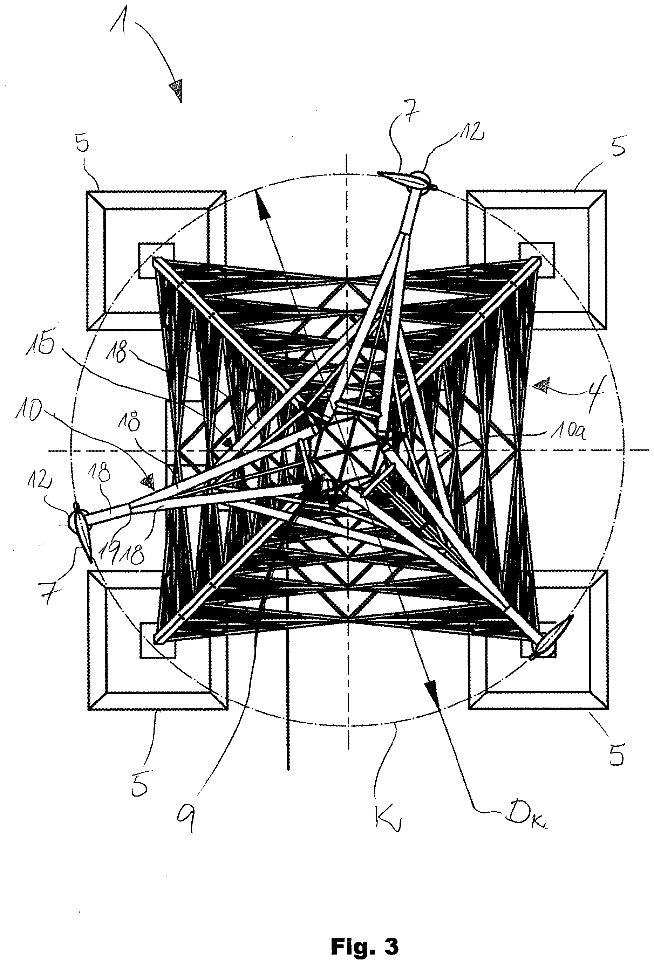

Fig. 3 zeigt die Vertikalwindkraftanlage 1 in einer schematischen Draufsicht. Hier wird deutlich, dass die Flügel 7 ein Flügelprofil aufweisen und sich auf einer Kreisbahn K um die Rotordrehachse $C_2$ bewegen. Ein Durchmesser $D_K$ Kreisbahn K beträgt beispielsweise 32 m und entspricht in etwa einem Maximaldurchmesser des Turmsystems 4.

Die Arme 10 besitzen an ihrem proximalen Ende zwei Streben 18, deren Enden horizontal voneinander beabstandet mit der Rotornabe 9 verbunden sind. An ihrem distalen Ende sind die Arme 10 zu einer einzigen Strebe 18 vereint. An einem Verbindungspunkt 19 sind die zum proximalen Ende hin führenden Streben 18 mit der zum distalen Ende hin führenden Strebe 18, an welcher der Pitchantrieb 12 befestigt ist, gabelartig zusammengeführt. Ferner ist das Querverbindungselement 10a der Queraufhängung 15 aus drei an ihren Enden miteinander verbundenen Streben 18 gebildet, die in einer Projektion entlang der Höhenrichtung Z ein gleichschenkliges Dreieck aufspannen, das in einer parallel zur Längsrichtung X und Querrichtung Y verlaufenden Ebene liegt.

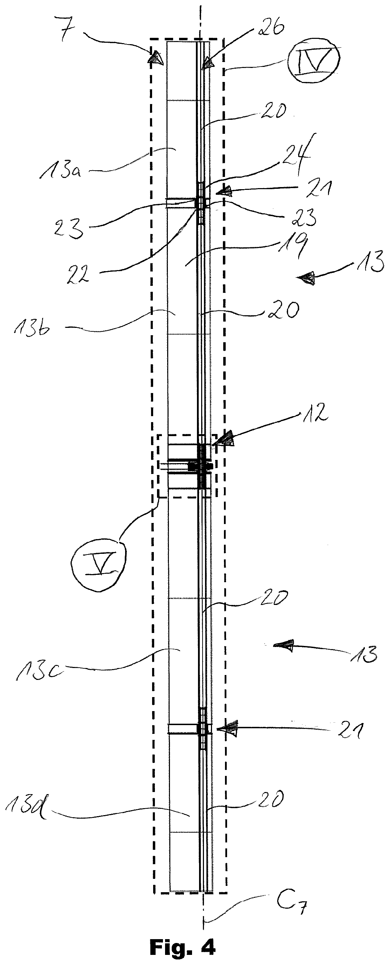

Fig. 4 ein in Fig. 2 markiertes Detail IV eines der Flügel 7 der Vertikalwindkraftanlage 1. der Flügel 7 besitzt Flügelblätter 19, die jeweils an einem Holm 20 befestigt ist, konzentrisch zur Flügeldrehachse $C_7$ angeordnet ist. Zwischen dem oberen Endabschnitt 13a und im oberen Mittelabschnitt 13b sowie dem unteren Mittelabschnitt 13c und dem unteren Endabschnitt 13d ist der Flügel 7 jeweils in einer Lagereinheit 21 um die Flügelachse $C_7$ drehbar beweglich gelagert. Die Lagereinheit 21 umfasst ein Lagergehäuse 22, in dem zwei Wälzlager 23 angeordnet sind, die eine als Hohlwelle ausgestaltete Lagerwelle 24 der Lagereinheit 21 umgreifen.

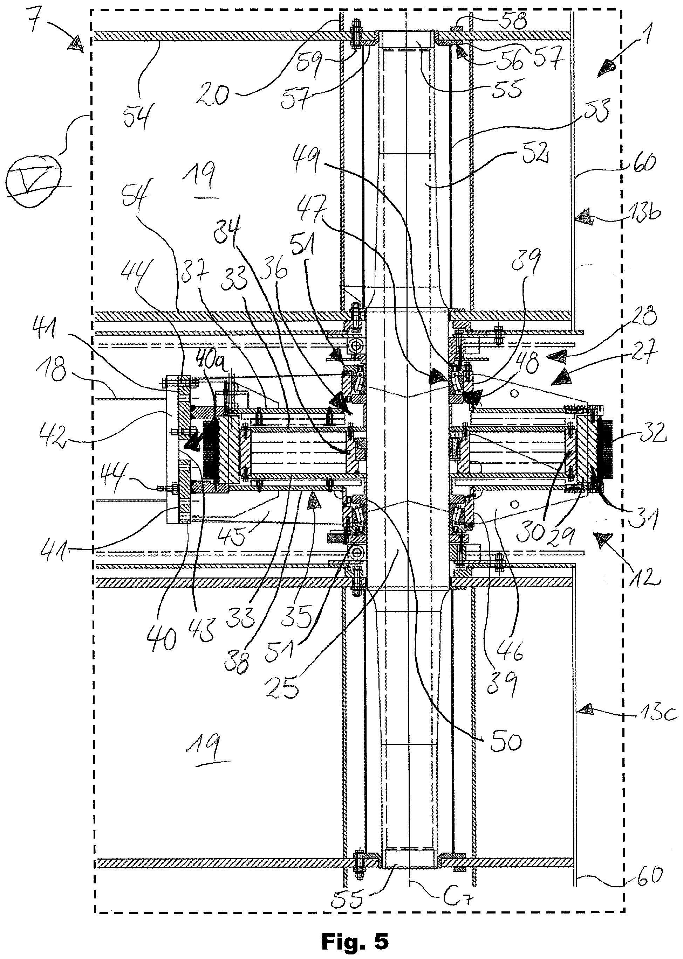

Zwischen dem oberen Mittelabschnitt 13b und dem unteren Mittelabschnitt 13c ist der Flügel 7 im Pitchantrieb 12 an einer Motorwelle 25 des Pitchantriebs 12 gelagert. Gemeinsam mit den Lagerwellen 24 und der Motorwelle 25 bilden die Holme 20 eine den Flügel 7 in seiner Gesamtlänge durchziehende Flügelachse 26, mit der die Flügelblätter 19 fest verbunden und drehbar beweglich gehalten sind. Beispielsweise können die Flügelblätter 19 in Schalenbauweise hergestellt am Holm 20 befestigt sein. Die Flügelblätter 19 besitzen dazu eine Aussenhaut zur Aufnahme von Torsionskräften, einen Holmflansch zur Aufnahme von Biegemomenten, einen Holmsteg sowie Rippen und Stringern, um ein Wellen oder Beulen der Aussenhaut zu verhindern (siehe Fig. 5).

Fig. 5 zeigt ein in Fig. 4 markiertes Detail V des Flügels 7 mit dem Pitchantrieb 12 in einer schematischen Querschnittsansicht entlang der Flügeldrehachse $C_7$. Der Pitchantrieb 12 besitzt einen Pitchmotor 27, der in einem Zwischenraum 28 zwischen dem oberen Mittelabschnitt 13b und dem unteren Mittelabschnitt 13c des Flügels 7 angeordnet ist. Der Pitchmotor 27 ist als elektronisch gesteuerter getriebeloser luftgekühlter Torquemotor ausgestaltet und besitzt einen Statorring 29 sowie einen vom Statorring 29 umfangsseitig umgebenden und davon über einen Spalt beabstandeten Rotorring 30. An einer Aussenumfangsfläche des Statorrings 29 ist ein Kühlkörper 31 mit Kühlrippen 32 befestigt, um Abwärme des Pitchmotors 27 ableiten zu können.

Der Rotorring 30 des Pitchmotors 27 ist auf zwei scheibenförmigen Felgen 33 montiert, die den Rotorring 30 über einen Spannsatz 34 drehfest mit der im Wesentlichen zylindrischen Motorwelle 25 verbinden. Über den Spannsatz 34 wird ein zwischen Statorring 29 und Rotorring 30 elektromagnetisch erzeugtes und um die Flügeldrehachse $C_7$ herum wirkendes Antriebsmoment des Pitchmotors 27 vom Rotorring 30 auf die Motorwelle 25 übertragen.

Ein Motorgehäuse 35 des Pitchmotors 27 bildet einen Motorinnenraum 36, in welchem der Rotorring 30 aufgenommen ist. Das Motorgehäuse 35 besitzt eine Decke 37 und einen Boden 38, die sich scheibenförmig entlang und im Wesentlichen parallel zu den Felgen 33 erstrecken. Innenumfangsseitig sind Decke 37 und Boden 38 jeweils mit einem Lagersitz 39 verbunden. Aussenumfangsseitig sind Decke 37 und Boden 38 mit Statorring 29 und Kühlkörper 31 sowie an einer zur den Flügel 7 tragenden Strebe 18 hin weisenden Seite des Pitchmotor 27 mit einem Motorflansch 40 des Pitchantriebs 12 verbunden.

Der Motorflansch 40 bildet Stirnflächen 41 aus, an denen die Strebe 18 über einen an der Strebe 18 angebrachten Aufhängungsflansch 42 mit dem Motorflansch 40 verbunden ist. Der Aufhängungsflansch 42 bildet eine Gegenstirnfläche 43 aus, die radial von der Rotordrehachse $C_2$ weg in Richtung zur Kreisbahn K der Flügel 7 hin weist. Motorflansch 40 und Aufhängungsflansch 42 sind mittels Verbindungselementen 44 miteinander verbunden, die vorzugsweise als wieder lösbare Verbindungselemente 44, wie beispielsweise Schrauben-Bolzenverbindungen ausgeführt sind. Zwischen den Stirnflächen 41 des Motorflansches 40 ist ein Freiraum 40a angeordnet, um im Bereich der Kühlrippen 32 ausreichend Platz zur Wärmeabfuhr bereitzustellen bzw. um einen Wärmestau zu verhindern.

Zwischen Lagersitz 39 und Motorflansch 40 erstrecken sich Versteifungslamellen 45, um die vom Lagersitz 39 aus über das Motorgehäuse 35 auf den Motorflansch 40 übertragenen vom Flügel 7 ausgehenden statischen und dynamischen Belastungen möglichst ohne Verwindung des Motorgehäuses 35 auf den Motorflansch 40 übertragen zu können. In den übrigen Abschnitten des Motorgehäuse 35 sind Stützlamellen 46 vorgesehen, die sich radial vom ringförmigen Lagersitz 39 nach aussen entlang Decke 37 und Boden 38 erstrecken, um diese zu versteifen und Verwindungen des Motorgehäuse 35 zu verhindern.

Versteifungslamellen 45 und Stützlamellen 46 sind jeweils vorteilhafterweise einstückig, beispielsweise durch verschweissen, mit Decke 37, Boden 38, Lagersitz 39 und Motorflansch 40 bzw. Decke 37, Boden 38 und Lagersitz 39 verbunden, wobei sie sich in und entgegengesetzt der Höhenrichtung Z stegartig von Decke 37 und Boden 38 weg erstrecken. Neben ihrer Versteifungswirkung tragen die Versteifungslamellen 45 und Stützlamellen 46 zusätzlich zur Kühlung des Pitchmotors 37 durch Wärmeabgabe über das Motorgehäuse 35 bei.

Zwischen den beiden Lagersitzen 39 und der Motorwelle 25 ist jeweils ein Motorlager 47 angeordnet. Die Motorlager 47 sind beispielsweise als Pendelrollenlager ausgeführt. Sie übertragen hohe Radialkräfte aus den Flügeln 7 auf die Streben 18 der Rotorarme 10 und versteifen zusätzlich den gesamten Rotor 2. Um die Motorlager 47 vor schädlichen Umwelteinflüssen zu schützen, sind die Motorlager 47 jeweils in einem Lageraufnahmeraum 48 aufgenommen, der durch Dichtelemente 49 weitestgehend hermetisch abgeschlossen ist.

Die Dichtelemente 49 dichten den Lageraufnahmeraum 48 sowohl gegenüber dem Motorinnenraum 36 als auch einer Umgebung der Vertikalwindkraftanlage 1 ab. Zum Motorinnenraum 36 hin ist der Lageraufnahmeraum 48 durch innere Ringe 50 verschlossen, die in axialer Richtung des Flügels 7 in bzw. entgegen der Höhenrichtung Z jeweils am Motorlager 47 sowie aussenumfangsseitig am Dichtelement 49 anliegend den Lageraufnahmeraum 48 gegenüber dem Motorinnenraum 36 abgrenzen. Gegenüber der Umgebung der Vertikalwindkraftanlage 1 ist der Lageraufnahmeraum 48 durch äussere Ringe 41 verschlossen, die jeweils aussen am Lagersitz 39 anliegen und innenumfangsseitig das Dichtelement 49 umschliessen.

An ihren zu den Flügelblättern 19 hin weisenden Enden ist die Motorwelle 25 mit einem Übergangsabschnitt 52 verbunden bzw. geht einstückig in diesen über. Der Übergangsabschnitt 52 verjüngt sich vom Pitchantrieb 12 weg verlaufend und ist in einem Flügelblattachsabschnitt 53 aufgenommen, der den Übergangsabschnitt 52 adapterartig mit sich quer zur Flügeldrehachse $C_7$ erstreckenden Rippen 54 der Flügel 7 drehfest verbindet. Dazu sind in Richtung entlang der Flügeldrehachse $C_7$ weisende Verbindungsenden 55 des Übergangsabschnittes 52 in Fixierungselementen 56 aufgenommen, welche die Verbindungsenden 55 wenigstens kraftschlüssig umschliessen und radial von den Verbindungsenden 55 wegweisende Flanschabschnitte 57 aufweisen, an denen Formschlusselemente 58 und weitere Verbindungselemente 59, beispielsweise ebenfalls wieder lösbar in Form von Schrauben-Bolzenverbindungen, vorgesehen sind, die einen Form- und/oder Kraftschluss zwischen den Fixierungselementen 56 und der jeweiligen Rippe 54 herstellen.

Motorwelle 25, Übergangsabschnitt 52, Flügelblattachsabschnitt 53 und Holm 20 verlaufen koaxial zueinander. Dabei umgibt der Holm 20 den Flügelblattachsabschnitt, 53, der wiederum den Übergangsabschnitt 52 umgibt. Die Rippen 54 sind drehfest am Holm 20 angebracht und tragen eine Aussenhaut 60 des Flügels 7.

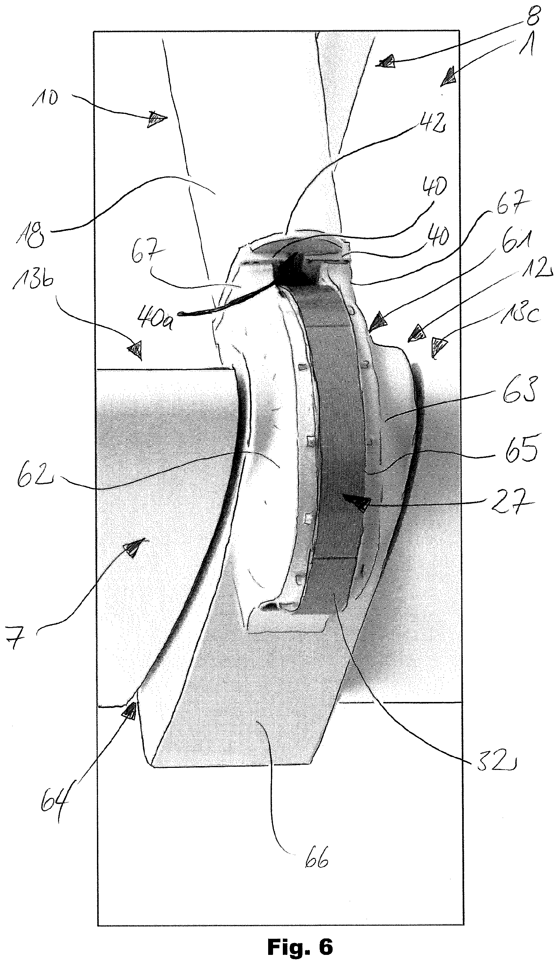

Fig. 6 zeigt eine schematische Perspektivansicht des Pitchantrieb 12, in welcher der Pitchmotor 27 mit einer aerodynamischen Verkleidung in Form einer Verschalung 61 versehen ist. Die Verschalung 61 weist eine Oberschale 62 und eine Unterschale 63 auf, die den Pitchmotor 27 im Bereich von Decke 37 und Boden 38 haubenartig umschliessen und daher Decke 37 und Boden 38 samt Versteifung 45 und Stützlamellen 46 abdecken, wodurch ein zwischen Pitchantrieb 12 und Flügel 7 gebildeter Antriebsspalt 64 und somit an diesem auftretende Druck- und damit verbundene Ertragsverluste möglichst gering gehalten werden. Zwischen Oberschale 62 und Unterschale 63 ist eine ringspaltförmige Kühlöffnung 65 gebildet, welche den Kühlkörper 31 axial umschliesst und durch welche die Kühlrippen 32 hindurch freiliegen, sodass sie von Umgebungsluft umströmt ungehindert die Abwärme des Pitchmotor 27 an die Umgebung der Vertikalwindkraftanlage 1 abgeben können.

Der Antriebsspalt 64 wird weiter verringert, indem die Verschalung 61 einen nach aerodynamischen Aspekten ausgeformten Fortsatz 66 ausbildet, der sich an Oberschale 62 und Unterschale 63 anschliesst und dessen Aussenkontur in einer Projektion entlang der Flügeldrehachse $C_7$ im Wesentlichen einem Flügelprofil der Flügel 7 entspricht. Zum Rotorarm 10 hin bildet die Verschalung 61 Abschlussstücke 67 aus, die bündig am Motorflansch 40 anliegen, dessen Aussendurchmesser zumindest abschnittsweise an einen Aussendurchmesser des Aufhängungsflansches 42 angepasst ist. Eine Aussenkontur des Aufhängungsflansches 42 ist wiederum an eine Aussenkontur der Strebe 18 angepasst. Somit gehen Abschlussstücke 67, Motorflansch 40, Verbindungsflansch 42 und Strebe 18 mit weitestgehend miteinander fluchtenden Aussenkonturen ineinander über und es besteht ein aerodynamisch vorteilhafter Übergang zwischen Pitchantrieb 12 und Flügelaufhängung 8.

Fig. 7 zeigt eine schematische Querschnittsansicht eines Antriebsstranges 70 der Vertikalwindkraftanlage 1 entlang einer Antriebswelle 71 des Antriebsstranges 70, deren Antriebsdrehachse $C_{71}$ koaxial zur Rotordrehachse $C_2$ verläuft. Die Rotornabe 9 besitzt einen Sockel 72, der einen Zapfen 73 ausbildet, welcher ebenfalls koaxial zu Antriebsdrehachse $C_{71}$ und Rotordrehachse $C_2$ verläuft. Dort wo sich der Sockel 72 zum Zapfen 73 in verjüngt ist eine entgegen der Höhenrichtung Z weisende Nabenschulter 74 am Sockel 72 ausgebildet, die auf einem Übergangsring 75 aufliegt, der seinerseits auf einem einen Teil einer Rotorlagerung 76 ausbildenden ersten Rotorlager 76a axial entgegen der Höhenrichtung Z aufliegt.

Die Rotorlagerung 76 umfasst neben dem ersten Rotorlager 76a noch ein zweites Rotorlager 76b und ein drittes Rotorlager 76c. Erstes und zweites Rotorlager 76a, 76b sind beispielsweise als vorgespannte Kegelrollenlager ausgeführt und übertragen aus Windlasten resultierende Radialkräfte in das Turmsystem 4. Dazu sind erstes und zweites Rotorlager 76a, 76b durch eine separate Lagerbuchse 77 auf einer Rotorwelle 78 verspannt. Der das erste und zweite Rotorlager 76a, 76b umfassende Teil der Rotorlagerung 76 ist axial frei schwimmend in eine einen Maschinenträger bildende Nabenanbindung 79 gefügt und bleibt somit frei von vertikalen Lasten. Das dritte Rotorlager 76c nimmt die vertikalen Lasten des Rotors 2 und somit im Wesentlichen dessen Gewichtskraft auf und ist dazu vorteilhafterweise als Axial-Pendelrollenlager ausgeführt, das die vertikalen Lasten direkt in das Maschinenhaus 3 einleitet.

Unterhalb des Maschinenhauses 3 schliesst ist ein Getriebe 81 der Vertikalwindkraftanlage 1 angeordnet, in welchem eine Rotordrehzahl der Rotorwelle 78 in eine Generatordrehzahl an einer Abtriebswelle 82 des Getriebes 81 umgesetzt wird. Eine Kupplungseinrichtung 83, beispielsweise in Form einer doppelkatalanischen, drehsteifen Stahllamellenkupplung, verbindet die Abtriebswelle 82 drehmomentübertragend mit einer Generatorwelle 84 eines Generators 85, beispielsweise eine Synchronmaschine mit Permanentmagneten, zum erzeugen elektrischen Stroms, vorliegend beispielsweise mit einer Leistung von maximal 750 kW. Die Kupplungseinrichtung 83 verhindert eine Überbestimmung der Lagerkräfte. Zur Drehmomentbegrenzung ist die Rotorwelle 78 mit einer Sollbruchstelle 86 versehen (beispielsweise Nenndrehmoment 500 kNm; Sollbruchmoment 1000 kNm; zul. Getriebespitzenmoment 1500 kNm).

Das Getriebe 81 übersetzt die erfindungsgemäss niedrige Rotordrehzahl in eine hohe Generatordrehzahl. Ein Getriebe-Übersetzungsfaktor i beträgt beispielsweise rund 75. Ein Getriebegehäuse 87 des Getriebes 81 ist starr über eine Flanschglocke 88 mit der Nabenanbindung verschraubt. So wird das hohe Betriebsdrehmoment direkt rückgeführt. Zwischen Rotorwelle 78 und Antriebsstrang 70 befindet sich eine doppelkardanische, ballig geschliffene Doppelzahnkupplung 89, die das Drehmoment des Rotor 2 ohne Überbestimmung von Lagerkräften auf das Getriebe 81 überträgt.

Ferner führt ein Pitchrohr 90 koaxial zur Rotorwelle 78 durch das Getriebe 81 und dient der Durchführung von Steuerungs- und Leistungskabeln für den Pitchantrieb 12. Das Pitchrohr 12 wird in der Kupplung 89 oberhalb der Sollbruchstelle 86 angetrieben, indem es mit dem Rotor 2 drehfest verbunden ist. Somit werden nach einem Bruch der Sollbruchstelle 86 und anschliessenden Auslauf der Anlage die Kabel bzw. Leitungen zur Signal- und/oder Energieübertragung (siehe Fig. 11) nicht verdreht und bleiben daher intakt.

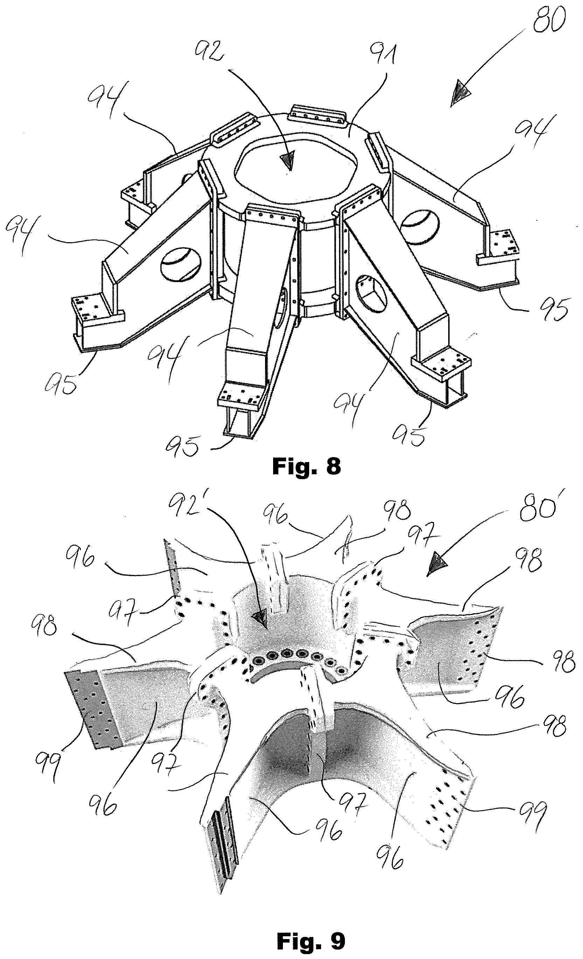

Fig. 8 zeigt eine schematische Perspektivansicht einer ersten erfindungsgemässen Ausführungsform der Nabenanbindung 80 der Vertikalwindkraftanlage 1. Die Nabenanbindung 80 umfasst einen zylindrischen, trommelartigen einstückig ausgeformten Grundkörper 91, der eine Durchführung 92 zur Aufnahme einer Wellen-Lagereinheit 93 (siehe Fig. 7) des Antriebsstranges 70 bereitstellt. Stützfüsse 94 sind abstandsgleich aussenumfangsseitig am Grundkörper 91 befestigt und erstrecken sich radial davon weg. Die Stützfüsse 94 bilden jeweils eine horizontal ausgerichtete Auflage 95 zur Montage der Nabenanbindung 80 am Turmsystem 4 aus. Die Stützfüsse 94 können beispielsweise aus Blechen zusammengeschweisst sowie durch Schweissen einstückig mit dem Grundkörper 91 verbunden oder an diesen angeflanscht sein, der wiederum ebenfalls aus Blechen zusammengeschweisst sein kann.

Fig. 9 zeigt eine schematische Perspektivansicht einer zweiten Ausführungsform einer erfindungsgemässen Nabenanbindung 80'. Im Gegensatz zur in Fig. 8 gezeigten Ausführungsform der Nabenanbindung 80 ist die Nabenanbindung 80' aus einer Vielzahl gleichförmiger Segmente 96 gebildet, die jeweils zwei Flanschenden 97 bereitstellen, an denen sie sich zu einem Kreis schliessend miteinander verbunden sind und somit gemeinsam eine Durchführung 92' zur Aufnahme der Wellen-Lagereinheit 93 formen. Jedes der Segmente 96 bildet einen Tragarm 98 aus. Am von der Durchführung 92' wegweisenden distalen Ende jedes Tragarmes 98 ist eine vertikal verlaufende Traglasche 99 ausgeformt, die in einer jeweiligen radialen Ebene liegend dazu ausgestaltet ist, am Turmsystem 4 montiert zu werden. Beispielsweise können die Segmente 96 einzeln gegossen sein, was dabei helfen kann, insbesondere in der Serienproduktion Herstellungskosten zu senken und darüber hinaus Materialstärken der Segmente 96 an hochbelastete Stellen anzupassen sowie Verrundungen zur Reduzierung von Kerbwirkungen daran vorzusehen, beispielsweise indem die Flanschenden 97 unter Bildung eines Bogenprofils in die Tragarme 98 übergehen.

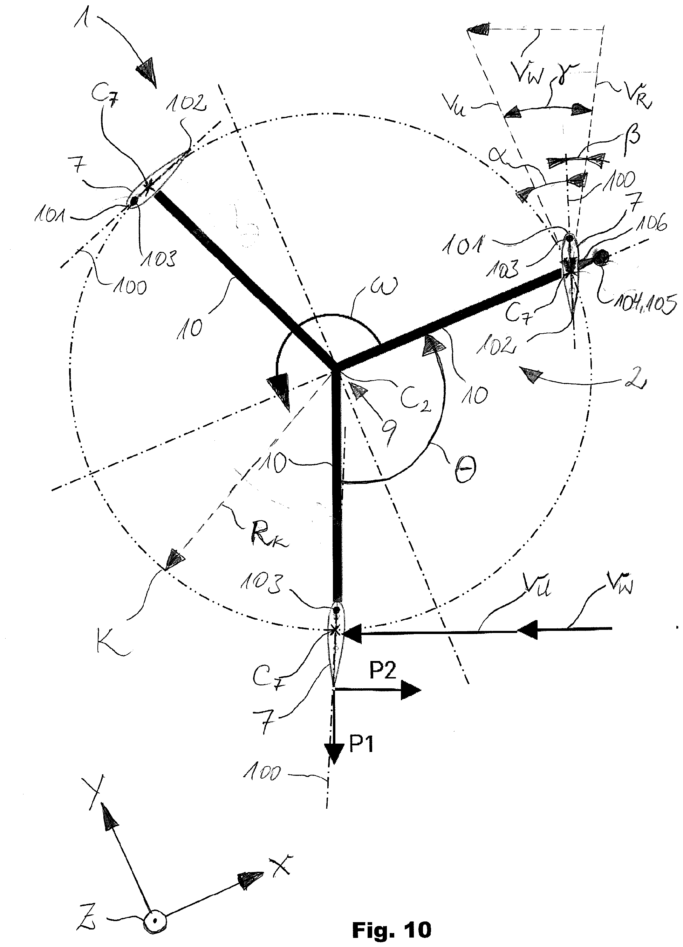

Fig. 10 zeigt eine schematische Draufsicht der Vertikalwindkraftanlage 1 zur Illustration von Winkelpositionen und Kräfteverhältnissen an den Flügeln 7 im Betrieb der Vertikalwindkraftanlage 1. Im Betrieb der Vertikalwindkraftanlage 1 werden die Flügel 7 vom Wind mit einer Windgeschwindigkeit $v_w$ angeströmt. Durch die Rotation des Rotors 2 um die Rotordrehachse $C_2$ ergibt sich eine Winkelgeschwindigkeit $\omega$ des Rotors 2, die multipliziert mit einem der Hälfte des Durchmessers $D_K$ der Kreisbahn K entsprechenden Radius $R_K$ der Kreisbahn K eine Umfangsgeschwindigkeit vu der Flügel 7 entlang der Kreisbahn K gemäss untenstehender Gleichung (1) ergibt:

$$v_U = \omega \times R_K \qquad\qquad (1)$$

Aus einer Differenz von Windgeschwindigkeit vw und Umfangsgeschwindigkeit vu resultiert eine Relativgeschwindigkeit $v_R$ der sich entlang der Kreisbahn K bewegenden Flügel 7 zum Wind gemäss untenstehender Gleichung (2):

$$v_R = v_W - v_U \qquad\qquad (2)$$

Zwischen Vektoren von Umfangsgeschwindigkeit vu und Relativgeschwindigkeit $v_R$ an den Flügel 7 besteht ein Anströmwinkel $\gamma$, der gemäss untenstehender Gleichung (3) aus einer Summe aus einem relativen Anströmungswinkel bzw. Anstellwinkel $\alpha$ und einem Steigungswinkel bzw. Pitchwinkel $\beta$ gebildet ist:

$$\gamma = \alpha + \beta \qquad\qquad (3)$$

Der Anstellwinkel $\alpha$ ist jeweils zwischen dem Vektor der Umfangsgeschwindigkeit $v_U$ und einer Profilsehne 100 der Flügel 7 gemessen, die geradlinig zwischen einer Anströmkante 101 und einer Abströmkante 102 verläuft. Der Pitchwinkel $\beta$ ist zwischen dem Vektor der Relativgeschwindigkeit $v_R$ und der Profilsehne 100 gemessen. Die Flügel 7 weisen ein symmetrisches Flügelprofil auf, wodurch die Flügelsehne eine Symmetrieebene der Flügel 7 bzw. deren Flügelblatts bildet.

Durch die Rotation des Rotors 2 um die Rotordrehachse $C_2$ ist die Relativgeschwindigkeit $v_R$ eine Funktion eines Azimut-Winkels $\Theta$ des Rotors 2, der beispielsweise für den jeweiligen Rotorarm 10 ausgehend von einem Nullpunkt bei Stellung in 90° zur Windrichtung aus dem Wind zugewandt drehend relativ zu einer Hauptachse der Vertikalwindkraftanlage 1 gemessen wird. Ein Tangens des Anströmwinkels $\gamma$ berechnet sich als Funktion von Windgeschwindigkeit vw, Relativgeschwindigkeit $v_R$ und Azimut-Winkel $\Theta$ bzw. einer Schnelllaufzahl $\lambda$ und Azimut-Winkel $\Theta$ gemäss untenstehender Gleichung (4):

$$\tan\gamma = \frac{v_W \ \sin\theta}{v_R + v_W\cos\theta} = \frac{\sin\theta}{\lambda\cos\theta} \qquad\qquad (4),$$

wobei die Schnelllaufzahl $\lambda$ wiederum gemäss untenstehender Gleichung (5) einem Verhältnis von Umfangsgeschwindigkeit vu zu Windgeschwindigkeit vw entspricht und erfindungsgemäss durch den jeweiligen Pitchantrieb 12 bzw. dessen Pitchmotor 27 den jeweiligen Windverhältnissen entsprechend bei variierenden Pitchwinkel $\beta$ möglichst optimal einzustellen und konstant zu halten ist, um eine Energieausbeute bzw. einen Ernteertrag einer erfindungsgemässen Vertikalwindkraftanlage 1 zu maximieren:

$$\lambda = \frac{v_U}{v_W} \qquad\qquad (5)$$

Um ein zur Variation des Pitchwinkels $\beta$ durch Drehung des Flügels 7 um die Rotordrehachse $C_7$ nötiges Stellmoment des Pitchantriebs 12 zu minimieren, ist es von Vorteil, wenn ein statischer Schwerpunkt des Flügels 7 möglichst auf der Rotordrehachse $C_7$ liegt. Beispielsweise ist die Rotordrehachse $C_7$ bei 20 bis 23%, vorzugsweise 21.5% einer von der Anströmkante 101 aus gemessenen Rotorblatttiefe auf der Profilsehne 100 liegend angeordnet. Um den Schwerpunkt auf die Rotordrehachse $C_7$ zu legen ist ein Gegengewicht 103 im Bereich der Anströmkante 101 im Flügel 7 angeordnet. Das Gegengewicht 103 ist beispielsweise aus Stabsegmenten gebildet, vorzugsweise eines Stahlrundstabs mit Durchmessern zwischen 60 und 100 mm, höchst vorzugsweise 80mm. Die Stabsegmente sind an den Rippen 54 befestigt. Vorteilhafterweise können die Segmente elektrisch leitend miteinander verbunden sein. Somit kann das Gegengewicht 103 eine Doppelfunktion erfüllen, in dem es zusätzlich als Blitzableiter dient.

Des Weiteren verfügt die Vertikalwindkraftanlage 1 über wenigstens einen Windgeschwindigkeitssensor 104 und/oder Windrichtungssensor 105. Der Windgeschwindigkeitssensor 104 und/oder Windrichtungssensor 105 ist am oberen Ende des Signal- und/oder Messmast 11 und/oder an wenigstens einem der Flügel 7 oder an allen Flügeln 7 angeordnet. Der Windgeschwindigkeitssensor 104 und/oder Windrichtungssensor 105 ist vorzugsweise im Bereich des Pitchantriebs 12 am Flügel 7 befestigt, weil dort gemessene Windgeschwindigkeiten und/oder -richtungen eine hohe Relevanz für die Steuerung des Pitchantrieb 12 aufweisen.

Um den Windgeschwindigkeitssensor 104 und/oder Windrichtungssensor 105 möglichst ausserhalb von vom Flügel 7 verursachten Luftturbulenzen zu halten, ist der Windgeschwindigkeitssensor 104 und/oder Windrichtungssensor 105 am distalen Ende eines am Flügel 7 bzw. Pitchantrieb 12 befestigten Stabes 106 angeordnet, das von der Rotordrehachse $C_2$ radial wegweisend über die Kreisbahn K hinaus in einen Bereich im Umfeld der Vertikalwindkraftanlage 1 ragt, der möglichst weitgehend ausserhalb von um den Rotor 2 und seine Komponenten herum gebildeten Luftströmungsgrenzschichten, also weitgehend ausserhalb des Einflussbereiches des Flügel 7s, liegt.

Fig. 11 zeigt ein schematisches Diagramm zur Darstellung der Funktionsweise einer erfindungsgemässen Steuereinrichtung 107 der Vertikalwindkraftanlage 1. Die Steuereinrichtung 107 umfasst eine Versorgungseinheit 108, die einerseits mit einer Motorregelungseinheit 109 verbunden ist, die einen Leistungsteil 110 beinhaltet, und andererseits mit einer Drossel 111 und einem Filter 112 verbunden ist, um eine möglichst Störungs- und fehlerfreie Energieversorgung zu gewährleisten. Die Leistungseinheit 110 es beispielsweise als Inverter ausgestaltet.

Über Leitungen 113 zur Signal- und/oder Energieübertragung ist die Motorregelungseinheit 109 mit dem Pitchantrieb 12, einer Energieversorgungseinrichtung 114 und einer Kontrolleinheit 115 zur Überwachung und Steuerung der Vertikalwindkraftanlage 1 verbunden. Die Energieversorgungseinrichtung 114 umfasst eine Hauptenergieversorgungseinheit 116 und eine Hilfsenergieversorgungseinheit 117, wobei letztere beispielsweise eine Notenergieversorgung der Steuerungseinrichtung 107 übernimmt, wenn die Hauptenergieversorgungseinheit 116 ausfällt bzw. nicht zur Verfügung steht.

Des Weiteren umfasst die Steuereinrichtung 107 eine Motorschutzeinheit 118 und eine Datenübertragungseinheit 119. Der Pitchantrieb 12 umfasst des Weiteren einen Drehgeber 120 mit einem Positionssensor 121 zur Überwachung einer Drehposition des Rotorrings 30 gegenüber dem Statorring 29. Der Pitchmotor 27 umfasst des Weiteren eine Motoreinheit 122, die wenigstens den Statorring 29 und den Rotorring 30 beinhaltet, und einer Temperaturmesseinheit 123, die einen ersten Temperatursensor 124 und wenigstens einen weiteren Temperatursensor 125 aufweist. Der erste Temperatursensor 124 ist beispielsweise als widerstandsabhängiger Temperatursensor (KTY) ausgeführt, wohingegen der weitere Temperatursensor 125 beispielsweise als Temperatursensor mit positiven Temperaturkoeffizienten (PTC) ausgeführt ist.

Im Betrieb der Vertikalwindkraftanlage 1 richtet der Leistungsteil 110 der Motorregelungseinheit 109 der Steuereinrichtung 107 beispielsweise dauerhaft einen zum Antrieb des Pitchmotors 27 erforderlichen Strom um. Beispielsweise kann der Leistungsteil 110 einen Strom von dauerhaft 100 bis 200, vorzugsweise 150 $A_{RMS}$ abgeben sowie einen Spitzenstrom von 200 bis 250, vorzugsweise 210 $A_{RMS}$ bereitstellen, damit kurzfristig ein maximales Drehmoment des Pitchmotor 27 abgerufen werden kann. Die Kontrolleinheit 115 berechnet zyklisch einen Sollwert S für die Verstellung jedes der Flügel 7, beispielsweise als ein Soll-Pitchwinkel βs, und stellt diesen über die entsprechende Leitung 113 der Motorregelungseinheit 109 zur Verfügung.

Mit Hilfe des Drehgebers 120 wird ein Istwert I, beispielsweise ein Ist-Pitchwinkel $β_I$, ermittelt und über die entsprechende Leitung 113 an die Motorregelungseinheit 109 übertragen. Die Motorregelungseinheit 109 ermittelt aus Sollwert S und Istwert I eine Differenzwert d, beispielsweise eine Winkelabweichung δ, und leitet daraus einen Stellwert U, beispielsweise in Form eines Steuerstromes A ab, der an die jeweilige Antriebseinheit 12 bzw. die Motoreinheit 122 des Pitchmotors 27 übertragen wird.

Dementsprechend regelt die Motorregelungseinheit 109 erfindungsgemäss den Pitchwinkel β unter möglichst geringer Winkelabweichung δ.

Die Temperaturmesseinheit 123 erfasst mit Hilfe des Temperatursensors 124 und des weiteren Temperatursensors 125 einen ersten Temperaturmesswert T bzw. wenigstens einen weiteren Temperaturmesswert $T_x$, die aus Redundanzgründen und/oder zu unterschiedlichen Verwendung ermittelt werden. So wird der Temperaturmesswert T über eine der Leitungen 113 zur Motorschutzeinheit 118 übertragen. Die Motorschutzeinheit 118 Vergleich den Temperaturmesswert T mit einem Temperaturgrenzwert und kann im Falle einer Überschreitung des Temperaturgrenzwertes über die entsprechende Leitung 113 ein Alarmsignal an die Motorregelungseinheit 109 übertragen, wo Massnahmen zum Schutz des jeweiligen Pitchantriebs 12, wie beispielsweise eine Notabschaltung bzw. Unterbrechung der Stromversorgung eingeleitet werden. Gleichzeitig kann die Motorschutzeinheit 118 über die entsprechende Leitung 113 Temperaturwerte zur Weitergabe von Temperaturdaten an die Motorregelungseinheit 109 und/oder Kontrolleinheit 115 an die Datenübertragungseinheit 119 übertragen.

Der weitere Temperaturmesswert $T_X$ wird über entsprechende Leitungen 113 direkt an die Motorregelungseinheit 109 übertragen, um eine Temperatur der Antriebseinheit 12 bzw. derer Komponenten im Rahmen einer vorgesehenen bzw. vorgeschriebenen Betriebstemperatur zu halten. In der Motorregelungseinheit 109 können unmittelbar Massnahmen zur Temperaturregelung eingeleitet werden, wohingegen in der Kontrolleinheit 115 längerfristige Temperaturregelungsmassnahmen vorgenommen werden können. Somit ist mit Hilfe des von der Motorschutzeinheit 118 auf Basis des Temperaturmesswerts T abgegebenen Alarmsignals eine kurzfristige Temperaturregelung zum Schutz der Antriebseinheit 12 bereitgestellt, wohingegen über die an die Kontrolleinheit 115 weitergeleiteten Temperaturdaten eine langfristige Temperaturregelung und über die direkte Weitergabe des weiteren Temperaturmesswert $T_x$ an die Motorregelungseinheit 109 eine mittelfristige Temperaturregelung möglich ist.

Die Steuereinrichtung 107 ist dazu ausgestaltet und eingerichtet, die folgenden zehn Betriebsmodi M0 bis M9 der Vertikalwindkraftanlage 1 zu realisieren:

- M0: Die Vertikalwindkraftanlage 1 ist in einem nullten Betriebsmodus M0 ausgeschaltet.

- M1: Anfahrbereitschaft der Vertikalwindkraftanlage 1 aus Windstille in einem erstem Betriebsmodus M1 bei Windgeschwindigkeiten unterhalb einer Startwindgeschwindigkeit $v_1$, also bei $0 < v_w < v_1$, mit beispielsweise $v_1$ = 3 m/s;

- M2: Anfahren der Vertikalwindkraftanlage 1 in einem zweiten Betriebsmodus M2 bei Windgeschwindigkeiten oberhalb der Startwindgeschwindigkeit $v_1$ und unterhalb einer Nennwindgeschwindigkeit $v_2$, also bei $v_1 \leq v_W < v_2$, mit beispielsweise $v_2$ = 12 m/s;

- M3: Überführen der Vertikalwindkraftanlage 1 von einem Widerstandslauf mit $λ \leq 1$ ausgehend in einen Schnelllauf mit $λ > 1$ in einem dritten Betriebsmodus M3 bzw. Anlaufmodus bei Windgeschwindigkeiten oberhalb der Startwindgeschwindigkeit $v_1$ und unterhalb einer ersten Abschaltwindgeschwindigkeit $v_3$, also bei $v_1 \leq vw < v_3$, beispielsweise

mit einer Mindestdrehzahl des Rotors von 4 [1/min] und einer ersten Abschaltwindgeschwindigkeit $v_3$ = 20 m/s (Mittelwert gemessen über 10 Minuten);

- M4: Abfahren der Vertikalwindkraftanlage 1 in einem vierten Betriebsmodus M4 bei Windgeschwindigkeiten oberhalb der ersten Abschaltwindgeschwindigkeit $v_3$ oder einer weiteren Abschaltwindgeschwindigkeit $v_4$, also bei $v_W > v_3$ bzw. $v_W > v_4$ mit beispielsweise $v_4$ = 30 m/s (Mittelwert gemessen über 3 Sekunden);

- M5: Wiederanfahren der Vertikalwindkraftanlage 1 in einem fünften Betriebsmodus M5 bei Unterschreiten einer Wiederanschaltwindgeschwindigkeit $v_5$, nach Abschaltung im vierten Betriebsmodus M4 mit beispielsweise $v_5$ = 18 m/s;

- M6: Betreiben der Vertikalwindkraftanlage 1 mit konstanter Schnelllaufzahl $\lambda$ in einem sechsten Betriebsmodus M6 bzw. Teillastmodus für Windgeschwindigkeiten oberhalb der Startwindgeschwindigkeit $v_1$ und unterhalb einer Nennwindgeschwindigkeit $v_2$, also bei $v_1 \leq v_w \leq v_2$, beispielsweise mit einer Schnelllaufzahl $\lambda$ zwischen 2 und 2.6, vorzugsweise zwischen 2.2 und 2.4, höchst vorzugweise 2.3 bei einer Nennwindgeschwindigkeit $v_2$ von 12m/s und einer Umfangsgeschwindigkeit der Flügel 7 auf der Kreisbahn K von $v_U$ = 27.6 m/s;

- M7: Betreiben der Vertikalwindkraftanlage 1 mit variabler Schnelllaufzahl A in einem siebten Betriebsmodus M7 bzw. Nennbetriebsmodus oder auch Vollastbetrieb mit einer Nenndrehzahl des Rotors von beispielsweise 16.5 [1/min] bei Windgeschwindigkeiten oberhalb der Nennwindgeschwindigkeit $v_2$ und unterhalb der ersten Abschaltwindgeschwindigkeit $v_3$ oder der weiteren Abschaltwindgeschwindigkeit $v_4$, also in einem Nennwindgeschwindigkeitsbereich mit $v_2 < v_W \leq v_3$ bzw. $v_2 < v_W \leq v_4$; beispielsweise mit einer Schnelllaufzahl $\lambda$ zwischen 1 und 1.8, vorzugsweise zwischen 1.3 und 1.5, höchst vorzugweise 1.38 bei einer ersten Abschaltwindgeschwindigkeit $v_3$ von 20m/s;

- M8: Notabfahren der Vertikalwindkraftanlage 1 in einem achten Betriebsmodus M8 bei extremen Windgeschwindigkeitsanstiegsgradienten $dv_W/dt$ grösser einem Abschaltgradienten der Windgeschwindigkeit; und

- M9: Ausschalten der Vertikalwindkraftanlage 1 in einem neunten Betriebsmodus M9 zum Überführen der Vertikalwindkraftanlage 1 in den nullten Betriebsmodus aus einem der Betriebsmodi M1 bis M8.

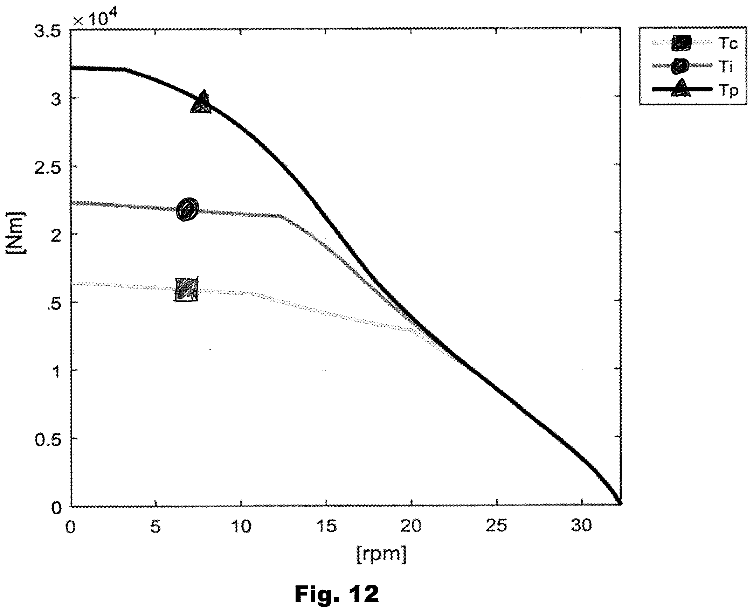

Fig. 12 zeigt ein schematisches Diagramm einer beispielhaften Drehmoment-Kennlinie des Pitchmotors 27. Das Diagramm zeigt ein maximales Drehmoment Tp, ein Nenndrehmoment Ti und kontinuierliches Drehmoment Tc des Pitchmotors 27 über der Umdrehungszahl des Pitchmotors 27. Das maximale Drehmoment Tp kann vom Pitchmotor 27 kurzfristig bereitgestellt werden um spontan, also innerhalb eines sehr kurzen stark begrenzten Zeitbereiches eine schnelle Verstellung des jeweiligen Flügels 7 zu bewirken. Bei Überschreitung des maximalen Drehmoments Tp, also bei Überlast, rutscht der Motor durch und ist somit eigensicher, d. h. es treten keine Schäden am Motor auf. Das Nenndrehmoment Ti kann dauerhaft bis zu Überschreitung eines Temperaturgrenzwertes abgerufen werden. Das kontinuierliche Drehmoment Tc steht in der Regel dauerhaft zur Verfügung und führt zu keinerlei Überschreitung von Temperaturgrenzwerten.

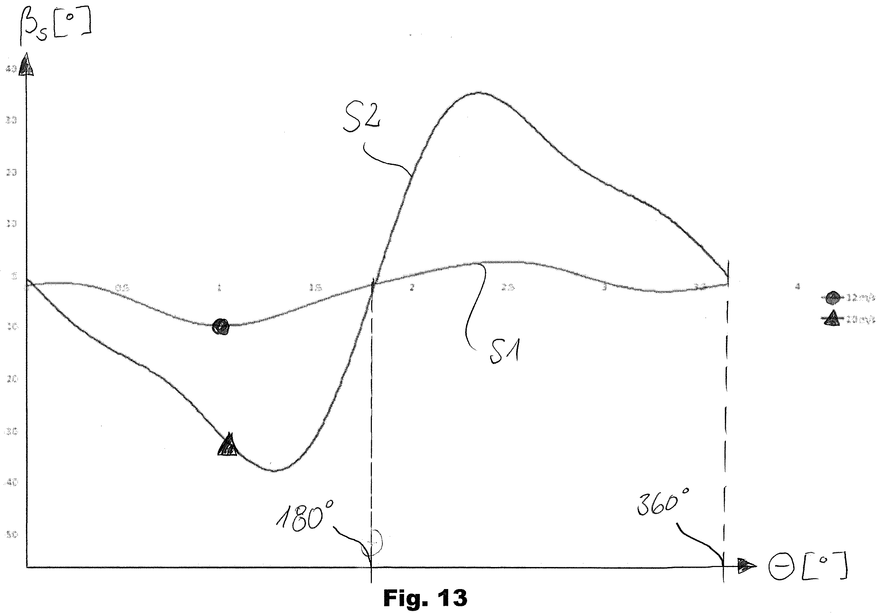

Fig. 13 zeigt ein schematisches Diagramm mit beispielhaften Kurvenscheiben zur Steuerung des Pitchmotors 12, nämlich eine erste Kurvenscheibe S1, die beispielsweise für die Nennwindgeschwindigkeit $v_2$ von beispielsweise 12 m/s vorgesehen ist, und eine weitere Kurvenscheibe S2, die für die erste Abschaltwindgeschwindigkeit $v_3$ von beispielsweise 20 m/s vorgesehen ist. Zwischen diesen beiden Windgeschwindigkeiten ist beispielsweise ein Nenn- bzw. Volllastbetrieb der Vertikalwindkraftanlage 1 gemäss siebten Betriebsmodus M7 vorgesehen, in dem der Rotor 2 mit einer Nenndrehzahl rotiert und der Generator 85 seine Nennleistung abgibt. Je Kurvenscheibe S1, S2 ist der Sollwert S des Pitchwinkels $\beta$ als Soll-Pitchwinkel $\beta_S$ in Abhängigkeit vom Azimut-Winkel $\Theta$ dargestellt.

Bei Nennwindgeschwindigkeit $v_2$ liegt der Soll-Pitchwinkel $\beta s$ bei einem Azimut-Winkel $\Theta$ von 0° bei weniger als 0°, etwa im Bereich von -2 bis -3°. Auf dem Weg zu einem Azimut-Winkel $\Theta$ von 90° durchschreitet der Soll-Pitchwinkel $\beta_S$ zunächst ein lokales Maximum von -2 bis -3° bei einem Azimut-Winkel $\Theta$ von ca. 20° und anschliessend einen zwischen -3 und -4° liegenden Wendepunkt bei einem Azimut-Winkel $\Theta$ von ca. 20° bis der Soll-Pitchwinkel $\beta_S$ bei einem Azimut-Winkel $\Theta$ von ca. 50° ein absolutes Minimum von ca. -10° erreicht.

Bei einem Azimut-Winkel $\Theta$ von 180° liegt der Soll-Pitchwinkel $\beta s$ für die Nennwindgeschwindigkeit $v_2$ wieder bei ca. 2 bis -3° und erreicht dann bei einem Azimut-Winkel $\Theta$ von ca. 200° einen Wert von 0°. Bei einem Azimut-Winkel $\Theta$ von ca. 250° erreicht der Soll-Pitchwinkel $\beta s$ für die Nennwindgeschwindigkeit $v_2$ sein absolutes Maximum von ca. 2 bis 3° und erreicht dann bei einem Azimut-Winkel $\Theta$ von ca. 290° wieder einen Wert von 0° und in etwa gleichzeitig einen Wendepunkt. Anschliessend durchschreitet der Soll-Pitchwinkel $\beta_S$ ein lokales Minimum von ca. -3 bis -4° bei einem Azimut-Winkel $\Theta$ von ca. 330° und erreicht abschliessend bei einem Azimut-Winkel $\Theta$ von ca. 360° wieder seinen Ausgangsbereich von -2 bis -3°.

Bei der ersten Abschaltwindgeschwindigkeit $v_3$ liegt der Soll-Pitchwinkel βs bei einem Azimut-Winkel Θ von 0° bei weniger als 0°, etwa im Bereich von -1 bis -2°, und ist somit kleiner als der Soll-Pitchwinkel $β_S$ bei einem Azimut-Winkel Θ von 0° bei Nennwindgeschwindigkeit $v_2$. Auf dem Weg zu einem Azimut-Winkel Θ von 90° durchschreitet der Soll-Pitchwinkel $β_S$ ohne lokales Maximum einen zwischen -14 und - 16° liegenden Wendepunkt bei einem Azimut-Winkel Θ von ca. 45° bis der Soll-Pitchwinkel $β_S$ bei einem Azimut-Winkel Θ von ca. 100° mit ca. -30° einen weiteren Wendepunkt und dann bei einem Azimut-Winkel Θ von ca. 100° ein absolutes Minimum von ca. -37° bis -38° erreicht.

Bei einem Azimut-Winkel Θ von 180° liegt der Soll-Pitchwinkel βs für die erste Abschaltwindgeschwindigkeit $v_3$ ähnlich wie der Soll-Pitchwinkel βs für die Nennwindgeschwindigkeit $v_2$ bei ca. -2 bis -3° und erreicht dann bei einem Azimut-Winkel Θ von ca. 170° früher als der Soll-Pitchwinkel $β_S$ für die Nennwindgeschwindigkeit $v_2$ einen Wert von 0°. Bei einem Azimut-Winkel Θ von ca. 230 bis 240° erreicht der Soll-Pitchwinkel $β_S$ sein absolutes Maximum von ca. 35° und erreicht dann bei einem Azimut-Winkel Θ von ca. 270° einen Wendepunkt mit ca. 25°. Anschliessend durchschreitet der Soll-Pitchwinkel βs einen Wendepunkt mit ca. 15° bei einem Azimut-Winkel Θ von ca. 320° und erreicht abschliessend bei einem Azimut-Winkel Θ von ca. 360° wieder seinen Ausgangsbereich von -1 bis -2°.

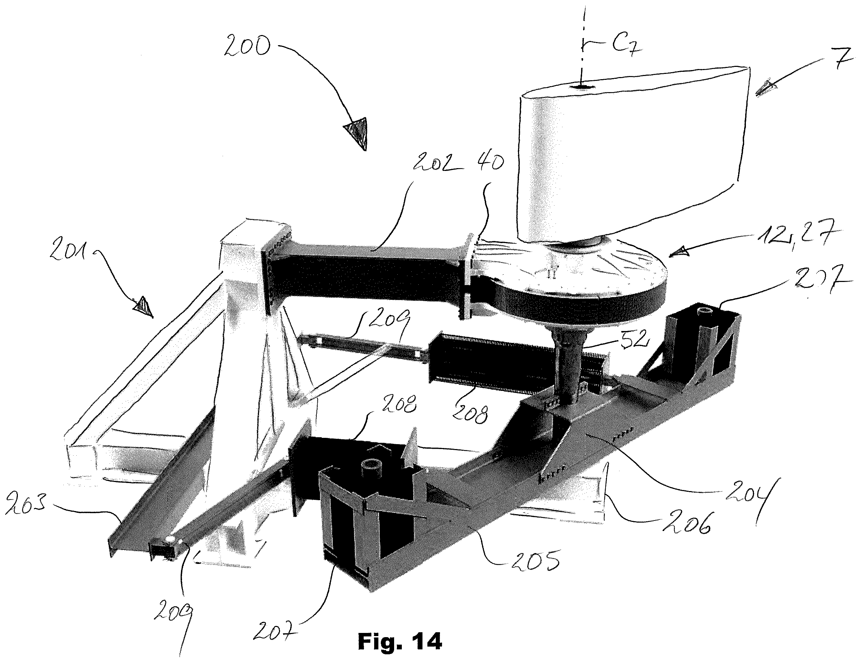

Fig. 14 zeigt eine schematische Perspektivansicht eines Prüfstandes 200 zur Ermittlung eines Positionierungsfehlers des Pitchmotors 27 der Vertikalwindkraftanlage 1. der Prüfstand 200 sitzt eine Rahmenkonstruktion 201, an der ein Haltearm 202 zum Halten des Pitchantriebs 12 bzw. Pitchmotors 27 und ein Querarm 203 befestigt ist. Der Pitchantrieb 12 ist samt einem Abschnitt des Flügels 7 ähnlich wie am Rotorarm 10 der Vertikalwindkraftanlage 1 über den Motorflansch 40 am Haltearm 202 des Prüfstandes 200 montiert. Der aus dem Pitchmotor 27 heraus ragende Übergangsabschnitt 52 ist in einer Wellenaufnahme 204 des Prüfstand 200 um die Flügeldrehachse $C_7$ drehbar aufgenommen.

Die Wellenaufnahme 204 ist mittig auf einem Pendelarm 205 angeordnet, der ebenfalls um die Flügeldrehachse $C_7$ drehbar bei einem Ausläufer 206 der Rahmenkonstruktion 201 gehalten ist. An beiden von der Flügeldrehachse $C_7$ wegweisenden Enden des Pendelarmes 205 ist jeweils ein Gewichtskörper 207 gehalten. Die Gewichtskörper 207 simulieren eine Gesamtmasse des Flügels 7. Des Weiteren sind die Enden des Pendelarmes 205 über Federelemente 208 in Form von Spiralfederpaketen und an diesen befestigten Gelenkseinrichtungen 209 mit den Querarm 203 verbunden. Die Federelemente 208 simulieren Windkräfte.

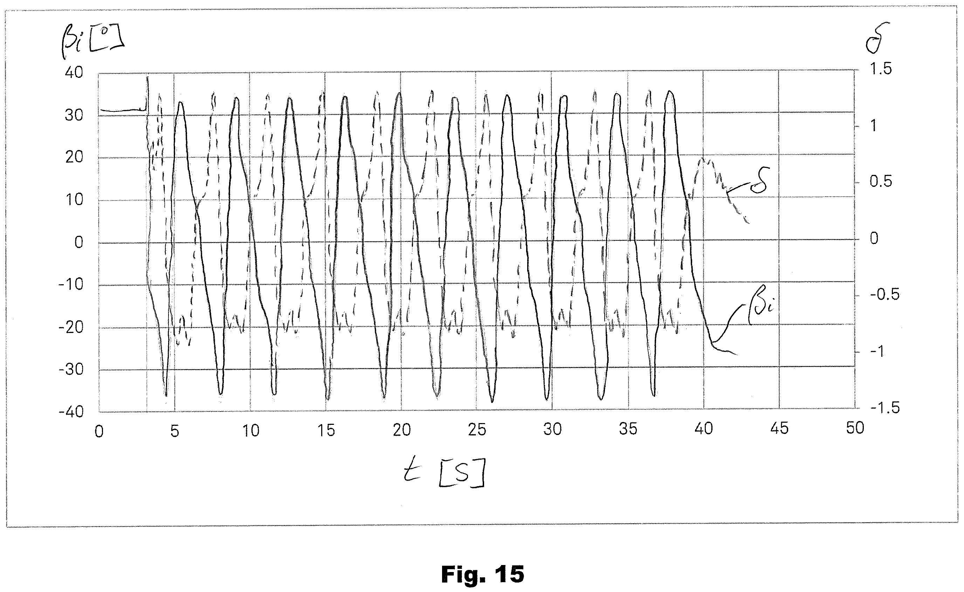

Fig. 15 zeigt ein schematisches Diagramm eines mittels des in Fig. 14 gezeigten Prüfstandes 200 ermittelten Positionierungsfehlers in Form einer Winkelabweichung δ des Pitchmotors 27 in ° über die Zeit t in Sekunden für eine Vielzahl von Regelungszyklen während denen ein simulierter Azimut-Winkel Θ jeweils eine Rotordrehung von 360° durchläuft. Nach einem anfänglichen Einschwingvorgang, der in der Vertikalwindkraftanlage 1 nicht auftritt, erreicht die Winkelabweichung δ einen Wert von betragsmässig weniger als 1.5° für Soll-Pitchwinkel βs die betragsmässig bei maximal 30 bis 40° liegen.

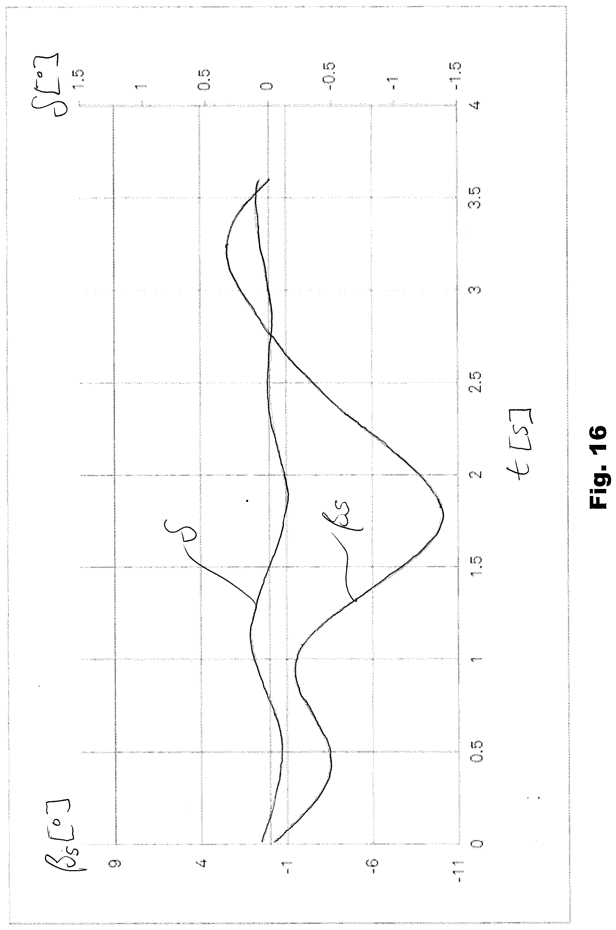

Fig. 16 zeigt ein schematisches Diagramm eines Positionierungsfehlers des Pitchmotors 27 in Form der Winkelabweichung δ in ° über die Zeit t in Sekunden über einen Regelungszyklus für die Nennwindgeschwindigkeit $v_2$. Bei Nennwindgeschwindigkeit $v_2$ liegt die Winkelabweichung δ betragsmässig stets unterhalb 0.5° und erreicht betragsmässig maximal ca. 0.25° jeweils nach lokalen und absoluten Minima sowie Maxima des Soll-Pitchwinkels $β_S$. Im Bereich der Wendepunkte des Soll-Pitchwinkels $β_I$ bewegt sich die Winkelabweichung δ um 0°.

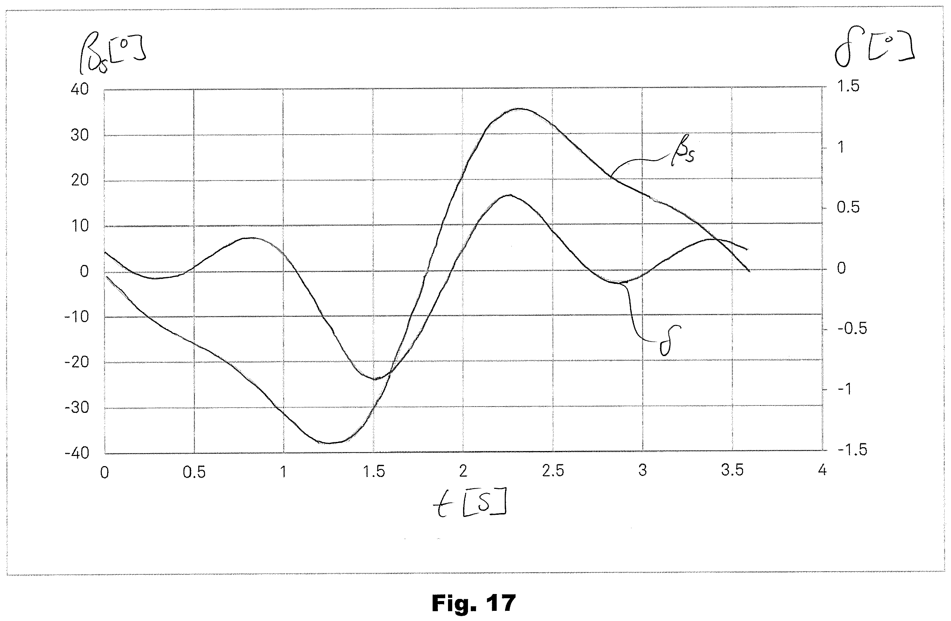

Fig. 17 zeigt ein schematisches Diagramm eines Positionierungsfehlers des Pitchmotors 27 in Form der Winkelabweichung δ in ° über die Zeit t in Sekunden über einen Regelungszyklus für die erste Abschaltwindgeschwindigkeit $v_3$. Bei erster Abschaltwindgeschwindigkeit $v_3$ liegt die Winkelabweichung δ betragsmässig stets unterhalb 1.5° und erreicht betragsmässig maximal ca. 1.45° nach lokalen und absoluten Minima sowie betragsmässig maximal ca. 0.6 bei lokalen und absoluten Maxima des Soll-Pitchwinkels $β_S$. Im Bereich der Wendepunkte des Soll-Pitchwinkels $β_I$ bewegt sich die Winkelabweichung δ ebenfalls um 0°. Generell fällt die Winkelabweichung δ bei erster Abschaltwindgeschwindigkeit $v_3$ also leicht höher aus als bei Nennwindgeschwindigkeit $v_2$.

Im Rahmen des Erfindungsgedankens sind Abweichungen von den oben beschriebenen Ausführungsformen und Ausführungsbeispielen möglich. So wird ein Fachmann erkennen, dass sich Kennwerte und Parameter der Vertikalwindkraftanlage 1 und ihrer Komponenten sowie Werte zur Steuerung der Komponenten je nach Dimensionierung der Vertikalwindkraftanlage 1 richten und ändern können. Folglich sind sämtliche oben genannten Absolutwerte physikalischer Grössen, wie z.B. Windgeschwindigkeiten, hauptsächlich für einen hier beschriebenen Auslegungsfall der Vertikalwindkraftanlage 1 mit einer Nennleistung von 750 KW, einer Nennhöhe von 105m, einem Rotordurchmesser von 32 m, einer Länge der Flügel 7 von 54 m, einer Höhe der Flügel 7 über den Boden von 51 m, einer Höhe der Mitte der Flügel 7 über dem Boden von 78 m, einer Überlebenswindgeschwindigkeit von 59.5 m/s und einer Jahresmittelwindgeschwindigkeit von 8.5 m/s angegeben und können entsprechend anderer Auslegungsfälle variiert werden, woraus sich wiederum Abweichungen relativer physikalischer Grössen, wie z.B. Schnelllaufzahlen, ergeben können.

Des Weiteren können im Rahmen des Erfindungsgedankens anders als beim hier beschriebenen Ausführungsbeispiel mehr als zwei Pitchantriebe 12 pro Flügel 7 bzw. beispielsweise jeweils ein Pitchantrieb 12 pro Flügelabschnitt 13 vorgesehen sein. Mit anderen Worten können jeweils zwei vertikal voneinander getrennt angetriebene Flügel 7 bzw. Flügelabschnitte 13 vorgesehen sein. So können beispielsweise zwei Pitchantriebe 12 zwischen zwei Flügeln 7 oder Flügelabschnitten 13 angeordnet und als oberer und unterer Pitchantrieb 12 jeweils einem oberen bzw. einem unteren der beiden Flügel 7 oder Flügelabschnitte 13 zugeordnet sein. Der obere Flügel oder Flügelabschnitt 13 kann somit unabhängig vom unteren Flügel 7 oder Flügelabschnitt 13 um seine jeweilige Flügeldrehachse $C_7$ gedreht werden.

Jedem der beiden Flügel 7 oder Flügelabschnitte 13 kann wenigstens ein Windgeschwindigkeits- 104 und/oder Windrichtungssensor 105 zugeordnet sein. Vorteilhafterweise ist der wenigstens eine Windgeschwindigkeits- 104 und/oder Windrichtungssensor 105 mittig am jeweiligen Flügel 7 bzw. Flügelabschnitt 13 angeordnet und kann dort an einem Stab 106 angebracht sein wie oben beschrieben ist. Somit lassen sich für jeden der vertikal übereinander angeordneten Flügel 7 bzw. Flügelabschnitte 13 getrennt voneinander optimale Pitchwinkel β einstellen, um sich in Höhenrichtung Z entlang der Flügels 7 ändernde Windströmungsverhältnisse beim Betrieb der Vertikalwindkraftanlage 1 zu berücksichtigen und somit deren Effizienz weiter zu erhöhen. Dies ist insbesondere für Kreisbahndurchmesser $D_K$ in Betracht zu ziehen, die grösser als 32m sind und beispielsweise bei 45m liegen, wobei eine gesamte Länge $L_7$ der Flügel 7 dann beispielsweise ca. 73m betragen würde.

**Bezugszeichenliste**

| | |
|---|---|
| 1 | Vertikalwindkraftanlage |
| 2 | Rotor |
| 3 | Maschinenhaus |
| 4 | Turmsystem |
| 5 | Fundamente |
| 6 | Schaltschrank |
| 7 | Flügel |
| 8 | Flügelaufhängung |
| 9 | Rotornabe |
| 10 | Rotorarm |
| 10a | Querverbindungselement |
| 11 | Signal-und/oder Messmast |
| 12 | Pitchantrieb |
| 13 | Flügelabschnitt |
| 13a | oberer Endabschnitt |
| 13b | oberer Mittelabschnitt |
| 13c | unterer Mittelabschnitt |
| 13d | unterer Endabschnitt |
| 14 | Lagerpunkt |
| 15 | Queraufhängung |
| 16 | Querstreben |
| 17 | Stützstruktur |
| 18 | Strebe |
| 19 | Flügelblatt |
| 20 | Holm |
| 21 | Lagereinheit |
| 22 | Lagergehäuse |
| 23 | Wälzlager |
| 24 | Lagerwelle |
| 25 | Motorwelle |
| 26 | Flügelachse |
| 27 | Pitchmotor |
| 28 | Zwischenraum |
| 29 | Statorring |
| 30 | Rotorring |
| 31 | Kühlkörper |
| 32 | Kühlrippen |
| 33 | Felgen |
| 34 | Spannsatz |
| 35 | Motorgehäuse |
| 36 | Motorinnenraum |

| 37 | Wandung / Decke |
|----|----|
| 38 | Wandung / Boden |
| 39 | Lagersitz |
| 40 | Motorflansch |
| 40a | Freiraum |
| 41 | Stirnfläche |
| 42 | Aufhängungsflansch |
| 43 | Gegenstirnfläche |
| 44 | Verbindungselement |
| 45 | Versteifungslamelle |
| 46 | Stützlamelle |
| 47 | Motorlager |
| 48 | Lageraufnahmeraum |
| 49 | Dichtelement |
| 50 | innerer Ring |
| 51 | äußerer Ring |
| 52 | Übergangsabschnitt |
| 53 | Flügelblattachsabschnitt |
| 54 | Rippe |
| 55 | Verbindungsende |
| 56 | Fixierungselement |
| 57 | Flanschabschnitt |
| 58 | Formschlusselement |
| 59 | weiteres Verbindungselement |
| 60 | Außenhaut |
| 61 | Verschalung |
| 62 | Oberschale |
| 63 | Unterschale |
| 64 | Antriebsspalt |
| 65 | Kühlöffnung |
| 66 | Fortsatz |
| 67 | Abschlussstück |
| 70 | Antriebsstrang |
| 71 | Antriebswelle |
| 72 | Sockel |
| 73 | Zapfen |
| 74 | Nabenschulter |
| 75 | Übergangsring |
| 76 | Rotorlagerung |
| 76a | erstes Rotorlager |
| 76b | zweites Rotorlager |
| 76c | drittes Rotorlager |
| 77 | Lagerbuchse |
| 78 | Rotorwelle |
| 79 | Nabenanbindung |
| 80 | Nabenanbindung |
| 80' | Nabenanbindung |
| 81 | Getriebe |
| 82 | Abtriebswelle |
| 83 | Kupplungseinrichtung |
| 84 | Generatorwelle |
| 85 | Generator |
| 86 | Sollbruchstelle |
| 87 | Getriebegehäuse |
| 88 | Flanschglocke |
| 89 | Doppelzahnkupplung |
| 90 | Pitchrohr |
| 91 | Grünkörper |

| | |
|---|---|
| 92 | Durchführung |
| 92' | Durchführung |
| 93 | Wellen-Lagereinheit |
| 94 | Stützfüße |
| 95 | Auflage |
| 96 | Segment |
| 97 | Flanschende |
| 98 | Tragarm |
| 99 | Traglasche |
| 100 | Profilsehne |
| 101 | Anströmkante |
| 102 | Abströmkante |
| 103 | Gegengewicht |
| 104 | Windgeschwindigkeitssensor |
| 105 | Windrichtungssensor |
| 106 | Stab |
| 107 | Steuereinrichtung |
| 108 | Versorgungseinheit |
| 109 | Motorregelungseinheit |
| 110 | Leistungsteil |
| 111 | Drossel |
| 112 | Filter |
| 113 | Leitung |
| 114 | Energieversorgungseinrichtung |
| 115 | Kontrtolleinheit |
| 116 | Hauptenergieversorgungseinheit |
| 117 | Hilfsenergieversorgungseinheit |
| 118 | Motorschutzeinheit |
| 119 | Datenübertragungseinheit |
| 120 | Drehgeber |
| 121 | Positionssensor |
| 122 | Motoreinheit |
| 123 | Temperaturmesseinheit |
| 124 | Temperatursensor |
| 125 | weiterer Temperatursensor |
| | |
| 200 | Prüfstand |
| 201 | Rahmenkonstruktion |
| 202 | Haltearm |
| 203 | Querarm |
| 204 | Wellenaufnahme |
| 205 | Pendelarm |
| 206 | Ausläufer |
| 207 | Gewichtskörper |
| 208 | Federelement |
| 209 | Gelenkseinrichtung |
| | |
| i | Getriebeumsetzungsfaktor |
| d | Differenzwert |
| t | Zeit |
| $v_W$ | Windgeschwindigkeit |
| $v_U$ | Umfangsgeschwindigkeit |
| $v_R$ | Relativgeschwindigkeit |
| $v_1$ | Startwindgeschwindigkeit |
| $v_2$ | Nennwindgeschwindigkeit |
| $v_3$ | erste Abschaltwindgeschw. |
| $v_4$ | weitere Abschaltwindgeschw. |
| $v_5$ | Wiederanschaltwindgeschw. |

A Steuerstrom

$B_4$ maximale Breite des Turmsystems

$C_2$ Rotordrehachse

$C_7$ Flügeldrehachse

$C_{71}$ Antriebsdrehachse

$D_K$ Durchmesser der Kreisbahn

$L_7$ Länge der Flügel

K Kreisbahn

I Istwert

P1 Widerstandskraft

P2 Auftriebskraft

S Sollwert

S1 erste Kurvenscheibe

S2 weitere Kurvenscheibe.

T Temperaturmesswert

$T_x$ weiterer Temperaturmesswert

Tc kontinuierliches Drehmoment

Ti Nenndrehmoment

Tp maximales Drehmoment

U Stellenwert

$R_K$ Radius der Kreisbahn

X Längsrichtung

Y Querrichtung

Z Höhenrichtung

$\alpha$ Anstellwinkel

$\beta$ Pitchwinkel

$\beta_I$ Soll-Pitchwinkel

$\beta_S$ Ist-Pitchwinkel

$\delta$ Winkelabweichung

$\gamma$ Anströmwinkel

$\lambda$ Schnelllaufzahl

$\Theta$ Azimut-Winkel

$\omega$ Winkelgeschwindigkeit

**Patentansprüche**

1. Vertikalwindkraftanlage (1) mit einer Vielzahl vertikaler Flügel (7), die unabhängig voneinander jeweils an einer vertikalen Flügelachse (26) befestigt um eine jeweilige Flügeldrehachse ($C_7$) motorisch drehbar beweglich und auf einer gemeinsamen Kreisbahn (K) um eine vertikale Rotordrehachse ($C_2$) rotierbar gelagert sind,

  wobei die Flügelachsen (26) jeweils mit wenigstens einem Pitchmotor (27) zum motorischen Drehen der Flügel (7) versehen sind, dessen Motorwelle (25) konzentrisch zur jeweiligen Flügeldrehachse ($C_7$) verläuft, **dadurch gekennzeichnet, dass** jeder Pitchmotor (27) eine Verschalung (61) mit einer Oberschale (62), einer Unterschale (63) und einem nach aerodynamischen Aspekten ausgeformten Fortsatz (66) aufweist, der sich an Oberschale (62) und Unterschale (63) anschließt und dessen Aussenkontur in einer Projektion entlang der Flügeldrehachse ($C_7$) im Wesentlichen einem Flügelprofil der Flügel (7) entspricht.

2. Vertikalwindkraftanlage (1) nach Anspruch 1, **dadurch gekennzeichnet, dass** der Pitchmotor (27) als Torquemotor ausgestaltet ist, mit wenigstens einem Rotorring (30), der mit der Flügelachse (26) drehstarr verbunden ist.

3. Vertikalwindkraftanlage (1) nach Anspruch 1 oder 2, **dadurch gekennzeichnet, dass** die Flügelachsen (26) an Motorlagern (47) im Pitchmotor (27) gelagert sind.

4. Vertikalwindkraftanlage (1) nach Anspruch 3, **dadurch gekennzeichnet, dass** die Motorlager (47) innerhalb eines mit Hilfe von Dichtelementen (49) gegenüber einer Umgebung der Vertikalwindkraftanlage (1) abgedichteten Lageraufnahmeraum (48) angeordnet sind.

5. Vertikalwindkraftanlage (1) nach Anspruch 3 oder 4, **dadurch gekennzeichnet, dass** die Flügel (7) an wenigstens einem vom Pitchmotor (27) beabstandet angeordneten zusätzlichen Lagerpunkt (14) um ihre Flügeldrehachse ($C_7$) drehbar gelagert sind.

6. Vertikalwindkraftanlage (1) nach wenigstens einem der Ansprüche 1 bis 5, **dadurch gekennzeichnet, dass** die Flügelachsen (26) einen Flügelblattachsabschnitt (53) im Bereich eines Flügelblatts (19) des Flügels (7) sowie einen zwischen Flügelblattachsabschnitt (53) und Motorwelle (25) angeordneten Übergangsabschnitt (52) umfassen.

7. Vertikalwindkraftanlage (1) nach Anspruch 6, **dadurch gekennzeichnet, dass** der Übergangsabschnitt (52) sich von der Motorwelle (25) weg verlaufend verjüngt.

8. Vertikalwindkraftanlage (1) nach wenigstens einem der Ansprüche 1 bis 7, **dadurch gekennzeichnet, dass** die Pitchmotoren (27) jeweils über ein Motorgehäuse (35) verfügen, an dem eine die Flügel (7) mit einer Rotornabe (9) der Vertikalwindkraftanlage (1) verbindende Flügelaufhängung (8) befestigt ist.

9. Vertikalwindkraftanlage (1) nach Anspruch 8, **dadurch gekennzeichnet, dass** die Flügelaufhängung (8) eine Vielzahl von Streben (18) umfasst, wobei jeweils wenigstens eine der Streben (18) an das Motorgehäuse (35) angeflanscht ist.

10. Vertikalwindkraftanlage (1) nach Anspruch 8 oder 9, **dadurch gekennzeichnet, dass** das Motorgehäuse (35) Stützlamellen (46) umfasst, die radial zur Motorwelle (25) verlaufend einen Lagersitz (39) des Pitchmotors (27) aussenumfangsseitig mit einer in Achsrichtung weisenden Wandung (37, 38) des Motorgehäuses (35) verbinden.

11. Vertikalwindkraftanlage (1) nach wenigstens einem der Ansprüche 1 bis 10, **dadurch gekennzeichnet, dass** der Pitchmotor (27) mit einer nach aerodynamischen Aspekten ausgeformten Verschalung (61) verkleidet ist.

12. Vertikalwindkraftanlage (1) nach wenigstens einem der Ansprüche 1 bis 10, **gekennzeichnet, durch** eine Steuerungseinrichtung (107), die zur Steuerung der Pitchmotoren (27) mit diesen und mit wenigstens einem Windgeschwindigkeitssensor (104) und/oder wenigstens einem Windrichtungssensor (105) signalübertragend verbunden ist.

13. Vertikalwindkraftanlage (1) nach Anspruch 12, **dadurch gekennzeichnet, dass** der wenigstens eine Windgeschwindigkeitssensor (104) und/oder der wenigstens eine Windrichtungssensor (105) im Bereich wenigstens einem der Pitchmotoren (27) angeordnet ist.

14. Bausatz für eine Vertikalwindkraftanlage (1) gemäss wenigstens einem der Ansprüche 1 bis 12.

15. Verfahren zum Betrieb einer Vertikalwindkraftanlage (1), wobei Winkelpositionen um eine jeweilige vertikale Flügelachse (26) angetriebener vertikaler Flügel (7) der Vertikalwindkraftanlage (1) vorgegeben werden, wobei die Winkelpositionen der Flügel (7) mittels eines direkten Antriebs der Flügel (7) durch eine jeweils konzentrisch zur Flügelachse (26) angeordnete Motorwelle (25) eines Pitchmotors (27) permanent geregelt werden, **dadurch gekennzeichnet, dass** der Pitchmotor (27) eine Verschalung (61) mit einer Oberschale (62), einer Unterschale (63) und einem nach aerodynamischen Aspekten ausgeformten Fortsatz (66) aufweist, der sich an Oberschale (62) und Unterschale (63) anschließt und dessen Aussenkontur in einer Projektion entlang der Flügeldrehachse ($C_7$) im Wesentlichen einem Flügelprofil der Flügel (7) entspricht.

## Claims

1. A vertical wind turbine (1) with a plurality of vertical blades (7), which are each fastened to a respective vertical blade axis (26) such that they are motor-driven pivotable around a respective blade rotation axis ($C_7$) independently of one another, and are supported rotatable on a common circular path (K) around a vertical rotor rotation axis ($C_2$),

   wherein the blade axes (26) are each provided with at least one pitch motor (27) for motor-driven pivoting of the blades (7), a motor shaft (25) of which extends concentrically to the respective blade rotation axis ($C_7$), **characterized in that** each pitch motor (27) has a casing (61) with an upper shell (62), a lower shell (63) and an extension (66) formed in accordance with aerodynamic aspects, which adjoins the upper shell (62) and lower shell (63) and whose outer contour in a projection along the blade rotation axis ($C_7$) essentially corresponds to a blade profile of the blades (7).

2. The vertical wind turbine (1) according to claim 1, **characterized in that** the pitch motor (27) is embodied as a torque motor, with at least one rotor ring (30) that is torsionally rigidly coupled to the blade axis (26).

3. The vertical wind turbine (1) according to claim 1 or 2, **characterized in that** the blade axles (26) are supported on motor bearings (47) in the pitch motor (27).

4. The vertical wind turbine (1) according to claim 3, **characterized in that** the motor bearings (47) are positioned in a bearing receiving chamber (48) that is sealed up against the surroundings of the vertical wind turbine (1) with the aid of sealing elements (49).

5. The vertical wind turbine (1) according to claim 3 or 4, **characterized in that** the blades (7) are supported rotatable around their blade rotation axis (C7) at at least one additional bearing point (14) arranged at a distance from the pitch motor (27).

6. The vertical wind turbine (1) according to at least one of claims 1 to 5, **characterized in that** the blade axes (26) include a vane axis section (53) in the region of a vane (19) of the blade (7) and a transition section (52) positioned between the vane axis section (53) and the motor shaft (25)

7. The vertical wind turbine (1) according to claim 6, **characterized in that** the transition section (52) tapers away from the motor shaft (25).

8. The vertical wind turbine (1) according to at least one of claims 1 to 7, **characterized in that** the pitch motors (27) each have a motor housing (35) at which a blade mount (8) is mounted, which connects the blades (7) to a rotor hub (9) of the vertical wind turbine (1).

9. The vertical wind turbine (1) according to claim 8, **characterized in that** the blade mount (8) comprises a plurality of struts (18), with at least one respective strut (18) being flange mounted to the motor housing (35).

10. The vertical wind turbine (1) according to claim 8 or 9, **characterized in that** the motor housing (35) includes support ribs (46), which extend radially to the motor shaft (25) and connect a bearing seat (39) of the pitch motor (27) on the side of an outer circumference of the bearing seat (39) to a wall (37, 38) of the pitch motor housing (35) facing in axial direction.

11. The vertical wind turbine (1) according to at least one of claims 1 to 10, **characterized in that** the pitch motor (27) is cased-in by a casing (61) shaped according to aerodynamic aspects.

12. The vertical wind turbine (1) according to at least one of claims 1 to 10, **characterized by** a control device (107) for control of the pitch motors (27) that is connected in a signal-transmitting manner to the pitch motors (27) and to at least one wind speed sensor (104) and/or at least one wind direction sensor (105).

13. The vertical wind turbine (1) according to claim 12, **characterized in that** the at least one wind speed sensor (104) and/or the at least one wind direction sensor (105) is arranged in the region of at least one of the pitch motors (27).

14. A kit for a vertical wind turbine (1) according to at least one of claims 1 to 12.

15. A method for operating a vertical wind turbine (1), wherein angular positions of vertical blades (7) of the vertical wind turbine (1), which are driven around a respective vertical blade axis (26), are predetermined, wherein the angular positions of the blades (7) are continuously controlled by means of a direct drive of the blades (7) by a motor shaft (25) of a respective pitch motor (27) positioned concentrically to the blade axis (26), **characterized in that** the pitch motor (27) has a casing (61) with an upper shell (62), a lower shell (63) and an extension (66) formed in accordance with aerodynamic aspects, which adjoins the upper shell (62) and lower shell (63) and whose outer contour in a projection along the blade rotation axis ($C_7$) essentially corresponds to a blade profile of the blades (7).

**Revendications**

1. Eolienne verticale (1), comprenant une pluralité d'ailes verticales (7) qui sont montées mobiles par rotation motorisée autour d'un axe de rotation d'aile ($C_7$) respectif en étant fixées respectivement à un axe d'aile vertical (26), indépendamment les unes des autres, et qui sont montées de façon à pouvoir tourner sur une trajectoire circulaire (K) commune autour d'un axe de rotation de rotor vertical ($C_2$),

   dans laquelle les axes d'aile (26) sont respectivement pourvus d'au moins un moteur pitch (27) pour la rotation motorisée des ailes (7) et dont l'arbre de moteur (25) s'étend de manière concentrique par rapport à l'axe de rotation d'aile ($C_7$) respectif,
   **caractérisée en ce que** chaque moteur pitch (27) présente un coffrage (61) pourvu d'une coque supérieure (62), d'une coque inférieure (63) et d'un prolongement (66) façonné selon des aspects aérodynamiques qui prolonge la coque supérieure (62) et la coque inférieure (63) et dont le contour extérieur correspond dans une projection le long de l'axe de rotation d'aile ($C_7$) substantiellement à un profil d'aile des ailes (7).

2. Eolienne verticale (1) selon la revendication 1, **caractérisée en ce que** le moteur pitch (27) est configuré sous la forme d'un moteur couple, comprenant au moins une bague de rotor (30) qui est reliée à l'axe d'aile (26) de manière solidaire en rotation.

3. Eolienne verticale (1) selon la revendication 1 ou 2, **caractérisée en ce que** les axes d'aile (26) sont montés sur des supports de moteur (47) dans le moteur pitch (27).

4. Eolienne verticale (1) selon la revendication 3, **caractérisée en ce que** les supports de moteur (47) sont disposés à l'intérieur d'un espace de logement de support (48) rendu étanche par rapport à un environnement de l'éolienne verticale (1) à l'aide d'éléments d'étanchéité (49).

5. Eolienne verticale (1) selon la revendication 3 ou 4, **caractérisée en ce que** les ailes (7) sont montées rotatives autour de leur axe de rotation d'aile ($C_7$) en au moins un point de support (14) supplémentaire, disposé à distance du moteur pitch (27).

6. Eolienne verticale (1) selon au moins l'une des revendications 1 à 5, **caractérisée en ce que** les axes d'aile (26) comprennent une partie d'axe de pale (53) au niveau d'une pale (19) de l'aile (7) ainsi qu'une partie de transition (52) disposée entre la partie d'axe de pale (53) et l'arbre moteur (25).

7. Eolienne verticale (1) selon la revendication 6, **caractérisée en ce que** la partie de transition (52) s'amincit en s'éloignant de l'arbre moteur (25).

8. Eolienne verticale (1) selon au moins l'une des revendications 1 à 7, **caractérisée en ce que** les moteurs pitch (27) disposent respectivement d'un carter de moteur (35) auquel est fixé un support de montage d'aile (8) reliant les ailes (7) à un moyeu de rotor (9) de l'éolienne verticale (1).

9. Eolienne verticale (1) selon la revendication 8, **caractérisée en ce que** la suspension d'aile (8) comprend une pluralité d'entretoises (18), dans laquelle respectivement au moins l'une des entretoises (18) est bridée au carter de moteur (35).

10. Eolienne verticale (1) selon la revendication 8 ou 9, **caractérisée en ce que** le carter de moteur (35) comprend des lamelles de support (46) qui relient en s'étendant radialement par rapport à l'arbre de moteur (25) un siège de support (39) du moteur pitch (27) du côté de la circonférence extérieure à une paroi (37, 38) du carter de moteur (35) tournée dans la direction axiale.

11. Eolienne verticale (1) selon au moins l'une des revendications 1 à 10, **caractérisée en ce que** le moteur pitch (27) est habillé par un coffrage (61) façonné selon des aspects aérodynamiques.

12. Eolienne verticale (1) selon au moins l'une des revendications 1 à 10, **caractérisée par** un dispositif de commande (107) qui est relié en transmission de signaux aux moteurs pitch (27) pour les commander et à au moins un capteur de vitesse du vent (104) et/ou au moins un capteur de direction du vent (105).

13. Eolienne verticale (1) selon la revendication 12, **caractérisée en ce que** ledit au moins un capteur de vitesse du vent (104) et/ou ledit au moins un capteur de direction du vent (105) est/sont disposé(s) au niveau d'au moins l'un des moteurs pitch (27).

**14.** Kit de montage, destiné à une éolienne verticale (1) selon au moins l'une des revendications 1 à 12.

**15.** Procédé permettant de faire fonctionner une éolienne verticale (1), dans lequel des positions angulaires autour d'un axe d'aile vertical (26) respectif des ailes verticales (7) entraînées de l'éolienne verticale (1) sont prédéfinies, dans lequel les positions angulaires des ailes (7) sont régulées de manière permanente au moyen d'un d'entraînement direct des ailes (7) par un arbre moteur (25) d'un moteur pitch (27), disposé respectivement de manière concentrique par rapport à l'axe d'aile (26), **caractérisé en ce que** le moteur pitch (27) présente un coffrage (61) pourvu d'une coque supérieure (62), d'une coque inférieure (63) et d'un prolongement (66) façonné selon des aspects aérodynamiques qui prolonge la coque supérieure (62) et la coque inférieure (63) et dont le contour extérieur dans une projection le long de l'axe de rotation d'aile ($C_7$) correspond substantiellement à un profil d'aile des ailes (7).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

EP 3 645 869 B1

**Fig. 13**

EP 3 645 869 B1

Fig. 14

**Fig. 15**

**Fig. 16**

EP 3 645 869 B1

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015185299 A1
- EP 2235365 B1
- US 3902072 A
- US 4410806 A
- US 4494007 A
- US 4609827 A
- US 6379115 B1

**In der Beschreibung aufgeführte Nicht-Patentliteratur**

- **LIXUN ZHANG ; YINGBIN LIANG ; ERXIAO LI ; SONG ZHANG ; JIAN GUO.** Vertical Axis Wind Turbine with Individual Active Blade Pitch Control. College of Mechanical and Electrical Engineering; Harbin Engineering University, 2012
- **PARASCHIVOIU ION ; TRIFU OCTAVIAN ; SAEED F.** H-Darrieus Wind Turbinewith Blade Pitch Control. International Journal of Rotating Machinery, vol. 2009
- **Y. STAELENS ; F. SAEED ; I. PARASCHIVOIU.** A Straight-bladed Variablepitch VAWT Concept for Improved Power Generation. *ASME 2003, Wind Energy Symposium,* Januar 2003, vol. 2003, 146-154